# EUROPEAN PATENT APPLICATION

(11) **EP 3 496 448 A1**
(43) Date of publication of application: **12.06.2019**
(21) Application number: 17836310.7
(22) Date of filing: 24.07.2017
(51) Int. Cl.: H04W 24/04, H04W 36/00

(54) **CELL CONFIGURATION METHOD AND DEVICE**

(30) Priority: 05.08.2016 CN 201610635900
(71) Applicant: China Academy of Telecommunications Technology, Haidian District Beijing 100191 (CN)
(72) Inventor: HE, Yuan, Beijing 100191 (CN); ZHANG, Dajun, Beijing 100191 (CN); QUAN, Haiyang, Beijing 100191 (CN)
(74) Representative: Körfer, Thomas
(86) International application number: PCT/CN2017/094108
(87) International publication number: WO 2018/024128

(57) **Abstract**

The present application relates to the technical field of mobile communications, and particularly relates to a cell configuration method and device, used to prevent severe data interruption and ensure normal communication for user equipment. The method comprises: in a scenario of jointly employing an MeNB and an SeNB, a first base station sends SCG configuration information to UE to perform SCG configuration; if the UE Determines that the SCG configuration fails, the UE sends to a network side SCG reconfiguration failure information; and then if an MCG configuration succeeds, then the UE and the network side keep the original SCG configuration information sent at the previous iteration unchanged, else an SCG release is triggered. In this way, shen only an SCG configuration fails, the present invention uses original SCG configuration information instead of frequently launching RRC re-establishment, such that severe data interruption is effectively avoided, and normal communication for user equipment is ensured, thus improving data transmission efficiency, ensuring system performance, and enhancing user experience.

## Description

This application claims priority of Chinese Patent Application No. 201610635900.2, filed with the Chinese Patent Office on August 5, 2016, and entitled "A method and apparatus for configuring a cell", which is hereby incorporated by reference in its entirety.

### Field

The present invention relates to the field of communications, and particularly to a method and apparatus for configuring a cell.

### Background

As the network technologies are developing, there is a growing demand for a mobile network, so it is a predominant trend in the development of future mobile communication technologies to improve a throughput of subscribers, a potential technical solution to improving the throughput of subscribers is to aggregate radio resource between nodes, and the technology to aggregate radio resource between nodes has been applied to the dual-connectivity technology in the existing Long Term Evolution-Advanced (LTE-A), and the technology of tight inter-working between an LTE system and a New Radio Access Technology (New RAT) (NR) in a 5G system.

Taking the dual-connectivity technology in the LTE-A system, the dual-connectivity technology refers to that a User Equipment (UE) can transmit uplink and downlink traffic concurrently on radio spectrum resources of two base stations, which manage their own cells in a distributed manner, where the base station managing a Master Cell Group (MCG) is a Macro evolved Node B (MeNB), i.e., a master eNB, and the base station managing a Secondary Cell Group (SCG) is a Small eNB (SeNB), i.e., a secondary eNB; and the MeNB is responsible for a coverage area and mobility, and the SeNB is responsible for offloading uplink and downlink data traffic to thereby improve a peak throughput of subscribers.

The user equipment to communicate with a base station shall firstly set up a Radio Resource Control (RRC) connection therewith, and the user equipment can communicate with the base station only after the RRC connection is set up successfully, but if the RRC connection fails, that is, the base station fails to switch the configuration, then an RRC connection will be newly set up so that the UE can communicate smoothly with the base station.

In the prior art, if an RRC connection fails, then an RRC connection will be newly set up with the MeNB and the SeNB.

Once the RRC connection fails while the base station is switching the configuration, an RRC re-setup procedure shall be initiated in the MCG no matter whether the MCG or the SCG fails to be configured, so radio resources in the MCG will be occupied, thus seriously hindering normal data communication between the subscriber and the MCG

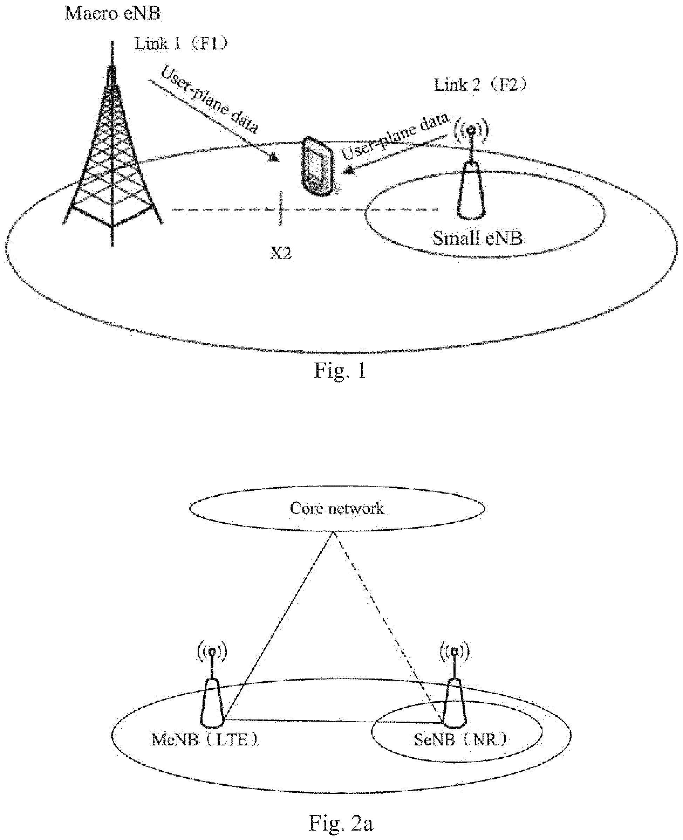

As illustrated in Fig. 1, taking a user equipment operating with the dual-connectivity technology in an LTE-A system as an example, the user equipment shall be provided with an MeNB and at least one SeNB, and the user equipment can communicate with a base station only after an RRC connection is set up successfully. As specified in the control-plane protocol of the dual-connectivity technology, a resulting RRC message can only be generated by the MeNB, and this RRC message can be passed to the user equipment so that an RRC connection is set up. Particularly the MeNB provides the SeNB with configuration parameters of the user equipment (e.g., a capability of the user equipment, a radio resource configuration of the user equipment, etc.); and the SeNB generates and feeds corresponding SCG configuration information (e.g., Physical Uplink Control Channel (PUCCH) configuration information) back to the MeNB upon reception of the configuration parameters of the user equipment transmitted by the MeNB, and the MeNB generates the resulting RRC message based upon locally configured MCG configuration information, and the SCG configuration information provided by the SeNB, and transmits this RRC message to the user equipment to set up the RRC connection.

Particularly, when Carrier Aggregation (CA) is configured on both the MeNB and the SeNB, that is, there is more than one cell managed by the MeNB, a group of cells managed by the MeNB constitutes the MCG; and alike when there is more than one cell managed by the SeNB, a group of cells managed by the SeNB constitutes the SCG

Particularly, the MeNB stores Radio Resource Management (RRM) measurement configuration information of the user equipment, and decides whether to provide by the SeNB the user equipment with an additional serving cell resource, according to a received measurement report (e.g., a traffic condition, a bearer type, etc.), and if so, then the MeNB will transmit request information to the SeNB, and the SeNB will determine configuration information for deciding whether to configure the user equipment with an additional serving cell, that is, generate SCG configuration information, according to the request information received from the MeNB, where the MeNB and the SeNB exchanges information via an X2 interface (for example, the MeNB transmits the configuration parameters of the UE to the SeNB, the SeNB transmits the SCG configuration information to the MeNB, etc.); and correspondingly the MeNB will also generate locally a part of SCG configuration information, and the MeNB will combine the SCG configuration information generated locally by the MeNB with the SCG configuration information transmitted by the SeNB into new SCG configuration information, and further generate and transmit the resulting RRC message to the user equipment according to MCG information generated locally for the MCG, where the MeNB will not change the SCG configuration information uploaded by the SeNB.

Furthermore, if the user equipment configures the MCG and the SCG upon reception of the RRC message, then if the MCG is configured successfully, but the SCG fails to be configured, then the user equipment will determine that the RRC connection fails, and instruct the MeNB to initiate an RRC re-setup procedure. However the user equipment can communicate normally after the MCG is configured successfully, so if the MeNB initiates the RRC re-setup procedure because the SCG fails to be configured, then data will be seriously interrupted, thus seriously hindering the user equipment from communicating normally.

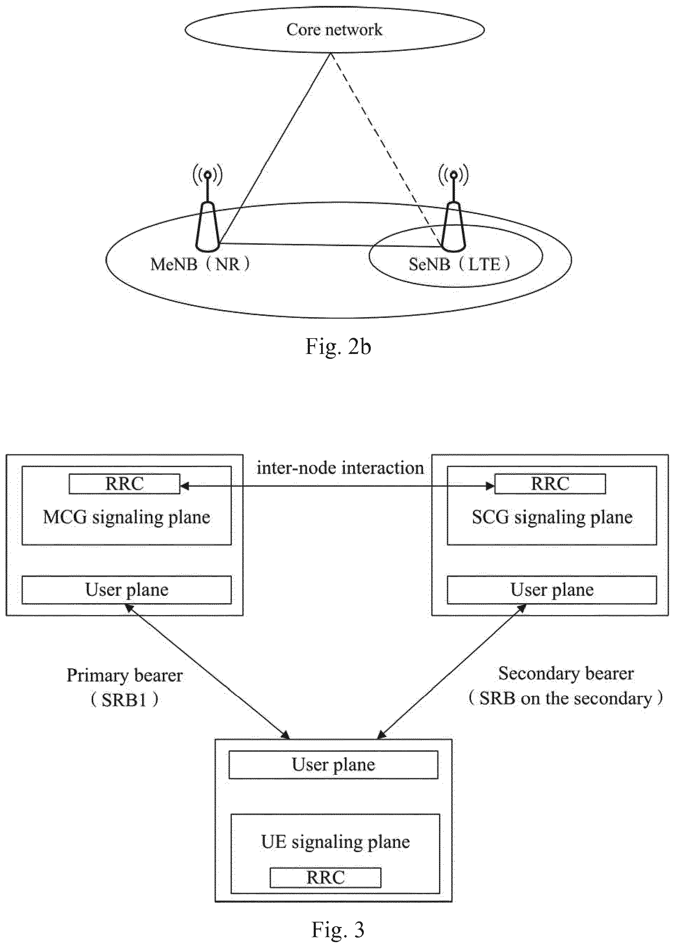

As illustrated in Fig. 2a and Fig. 2b, there is illustrated tight inter-working between an LTE system and an NR in a 5G system.

Here Fig. 3 illustrates a protocol architecture for tight inter-working between an LTE system and an NR in a 5G system.

In this protocol architecture, an RRC message can be generated by either an MCG or an SCG, and when the RC message is generated by the MCG, the RRC message is transmitted to a user equipment on a primary Signaling Radio Bearer (SRB), e.g., an SRB1; and when the RRC message is generated by the SCG the RRC message is transmitted to the user equipment on a secondary SRB, e.g., an SRB3.

Accordingly with the protocol above, configuration information of the SCG can be transmitted in the following two schemes no matter whether the LTE systems includes an MeNB, and the NR includes an SeNB (as illustrated in Fig. 2a), or the NR includes an MeNB, and the LTE system includes an SeNB (as illustrated in Fig. 2b).

In a first scheme, both the configuration information of the SCG, and configuration information of the MCG is transmitted by the MCG to the user equipment, and in this scheme, once an RRC connection fails, it is decided in the protocol to initiate by the MCG an RRC re-setup procedure no matter whether the configuration information of the MCG, or the configuration information of the SCG fails.

In a second scheme, the configuration information of the SCG is transmitted by the SCG to the user equipment, and the configuration information of the MCG is transmitted by the MCT to the user equipment, that is, they transmit their corresponding configuration information, and in this scheme, if the configuration information of the SCG fails, and the configuration information of the MCG succeeds, then it will also be decided in the protocol to initiate by the MCG an RRC re-setup procedure.

Apparently in the scenario where the LTE system and the NR inter-work tightly with each other in the 5G system, once the configuration information of the SCG fails to be configured, the MCG will initiate an RRC re-setup procedure even if the configuration information of the MCG is configured successfully, so data will be seriously interrupted, thus seriously hindering the user equipment from communicating normally.

In view of this, it is desirable to devise a new method for configuring a base station so as to address the drawback above.

### Summary

Embodiments of the invention provide a method and apparatus for configuring a base station so as to avoid data from being seriously interrupted, to thereby enable a user equipment to communicate normally.

Particular technical solutions according to the embodiments of the invention are as follows.

A method for configuring a cell, the method being applicable to a scenario where a Master eNB (MeNB) and a Secondary eNB (SeNB) interoperate with each other, and including:
triggering, by a first eNB, Secondary Cell Group (SCG) configuration information to be set;
triggering, by the first eNB, the SCG configuration information to be transmitted to a User Equipment (UE), and triggering the UE to configure an SCG; and
determining, by the first eNB, that the UE fails to configure the SCG, upon reception of SCG reconfiguration failure information, and triggering lastly transmitted original SCG configuration information to be maintained, or triggering the SCG to be released, upon determining that a Master Cell Group (MCG) is configured successfully.

Optionally, triggering, by the first eNB, the SCG configuration information to be set includes:
if the first eNB is the MeNB, then triggering, by the first eNB, the SeNB to set the corresponding SCG configuration information for the UE;
if the first eNB is the SeNB, then directly triggering, by the first eNB, the corresponding SCG configuration information to be set locally for the UE.

Optionally, triggering, by the first eNB, the SCG configuration information to be transmitted to the UE includes:
if the first eNB is the MeNB, then transmitting, by the first eNB, locally set MCG configuration information, and the SCG configuration information set by the SeNB to the UE using a first message; or transmitting, by the first eNB, only the SCG configuration information set by the SeNB to the UE using a first message;
if the first eNB is the SeNB, then transmitting, by the first eNB, the locally set SCG configuration information directly to the UE using a first message.

Optionally, determining, by the first eNB, that the UE fails to configure the SCG, upon reception of the SCG reconfiguration failure information includes:
if the first eNB is the MeNB, then determining, by the first eNB, that the UE fails to configure the SCG upon direct reception of the SCG reconfiguration failure information transmitted by the UE;
if the first eNB is the SeNB, then determining, by the first eNB, that the UE fails to configure the SCG, upon reception of the SCG reconfiguration failure information transmitted by the MeNB, wherein the SCG reconfiguration failure information transmitted by the MeNB is transmitted by the MeNB to the first eNB upon reception of SCG reconfiguration failure information transmitted by the UE.

Optionally, determining, by the first eNB, that the UE fails to configure the SCG and triggering the lastly transmitted original SCG configuration information to be maintained, upon determining that the MCG is configured successfully includes:
if the first eNB is the MeNB, then after the first eNB determines that the UE fails to configure the SCG if it is determined that the MCG is configured successfully, applying successfully configured MCG configuration information, and transmitting the SCG reconfiguration failure information to the SeNB to trigger the SeNB to maintain the lastly transmitted original SCG configuration information; or after the first eNB determines that the UE fails to configure the SCG, maintaining original MCG configuration information, and transmitting the SCG reconfiguration failure information to the SeNB to trigger the SeNB to maintain the lastly transmitted original SCG configuration information; or
if the first eNB is the SeNB, determining, by the first eNB, that the UE fails to configure the SCG and maintaining the lastly transmitted original SCG configuration information upon determining that the MCG is configured successfully.

Optionally, determining, by the first eNB, that the UE fails to configure the SCG, and triggering the SCG to be released, upon determining that the MCG is configured successfully includes:
if the first eNB is the MeNB, then after the first eNB determines that the UE fails to configure the SCG if it is determined that the MCG is configured successfully, applying successfully configured MCG configuration information, and transmitting the SCG reconfiguration failure information to the SeNB to trigger the SeNB to release the SCG; or after the first eNB determines that the UE fails to configure the SCG, maintaining original MCG configuration information, and transmitting the SCG reconfiguration failure information to the SeNB to trigger the SeNB to release the SCG; or
if the first eNB is the SeNB, determining, by the first eNB, that the UE fails to configure the SCG, and releasing the SCG upon determining that the MCG is configured successfully.

Optionally, the method further includes:
obtaining, by the first eNB, a corresponding SCG configuration failure reason based upon the received SCG reconfiguration failure information, and triggering corresponding new SCG configuration information to be reset and retransmitted, based upon the SCG configuration failure reason.

Optionally, triggering, by the first eNB, the corresponding new SCG configuration information to be reset and retransmitted, based upon the SCG configuration failure reason includes:
if the first eNB is the MeNB, then transmitting, by the first eNB, the SCG configuration failure reason to the SeNB to trigger the SeNB to reset the new SCG configuration information based upon the SCG configuration failure reason, and transmitting the new SCG configuration information to the first eNB, so that the first eNB transmits it to the UE, or triggering the SeNB to reset the new SCG configuration information based upon the SCG configuration failure reason, and transmitting the new SCG configuration information to the UE;
if the first eNB is the SeNB, then upon reception of the SCG configuration failure reason transmitted by the MeNB, triggering directly, by the first eNB, the new SCG configuration information to be reset locally based upon the SCG configuration failure reason, and transmitting the new SCG configuration information to the MeNB, so that the MeNB transmits it to the UE, or transmitting, by the first eNB, the new SCG configuration information directly to the UE.

Optionally, triggering, by the first eNB, the new SCG configuration information to be reset, based upon the SCG configuration failure reason includes:
triggering, by the first eNB, the SeNB to perform any one of the following operations:
if the SCG configuration failure reason is determined as scg-ConfigurationFailure, then the SeNB will reset the new SCG configuration information in a preset manner;
if the SCG configuration failure reason is determined as UECapability-Exceeded, then the SeNB will renegotiate with the MeNB, and after a UE capability is reevaluated, the SeNB will reset the new SCG configuration information according to an evaluation result;
if the SCG configuration failure reason is determined as ParseError or ParameterError, then the SeNB will adjust unsuccessfully configured SCG configuration information correspondingly, and reset the new SCG configuration information according to an adjustment result.

A method for configuring a cell, the method being applicable to a scenario where a Master eNB (MeNB) and a Secondary eNB (SeNB) inter-work with each other, and the method including:
configuring, by a User Equipment (UE), a Secondary Cell Group (SCG) according to SCG configuration information transmitted by the network side;
transmitting, by the UE, SCG reconfiguration failure information to the network side upon determining that the SCG fails to be configured; and
maintaining, by the UE, original SCG configuration information lastly transmitted by the network side, or releasing the SCG, upon determining that a Master Cell Group (MCG) is configured successfully.

Optionally, maintaining, by the UE, the original SCG configuration information lastly transmitted by the network side, or releasing the SCG, upon determining that the MCG is configured successfully includes:
if the UE further receives MCG configuration information transmitted by the network side, and determines that the MCG is configured successfully, then applying, by the UE, the successfully configured MCG configuration information, and maintaining the lastly transmitted original SCG configuration information, or releasing the SCG;
if the UE receives no MCG configuration information transmitted by the network side, then maintaining, by the UE, original MCG configuration information lastly transmitted by the network side, and maintaining the lastly transmitted original SCG configuration information, or releasing the SCG

Optionally, before the UE transmits the SCG reconfiguration failure information to the network side, the method further includes:
determining, by the UE, an SCG configuration failure reason, and generating the corresponding SCG reconfiguration failure information based upon the SCG configuration failure reason.

Optionally, the UE determines the SCG configuration failure reason as any one of:
scg-ConfigurationFailure;
UECapability-Exceeded;
ParseError; and
ParameterError.

An apparatus for configuring a cell, the apparatus being applicable to a scenario where a Master eNB (MeNB) and a Secondary eNB (SeNB) inter-work with each other, and the apparatus including:
a first triggering unit configured to trigger Secondary Cell Group (SCG) configuration information to be set;
a second triggering unit configured to trigger the SCG configuration information to be transmitted to a User Equipment (UE), and to trigger the UE to configure an SCG; and
a processing unit configured to determine that the UE fails to configure the SCG, upon reception of SCG reconfiguration failure information, and to trigger lastly transmitted original SCG configuration information to be maintained, or to trigger the SCG to be released, upon determining that a Master Cell Group (MCG) is configured successfully.

Optionally, the first triggering unit is configured to trigger the SCG configuration information to be set by:
if the apparatus is the MeNB, triggering the SeNB to set the corresponding SCG configuration information for the UE;
if the apparatus is the SeNB, directly triggering the corresponding SCG configuration information to be set locally for the UE.

Optionally, the second triggering unit is configured to trigger the SCG configuration information to be transmitted to the UE by:
if the apparatus is the MeNB, transmitting locally set MCG configuration information, and the SCG configuration information set by the SeNB to the UE using a first message; or transmitting only the SCG configuration information set by the SeNB to the UE using a first message;
if the apparatus is the SeNB, transmitting the locally set SCG configuration information directly to the UE using a first message.

Optionally, the processing unit is configured to determine that the UE fails to configure the SCG, upon reception of the SCG reconfiguration failure information by:
if the apparatus is the MeNB, determining that the UE fails to configure the SCG, upon direct reception of the SCG reconfiguration failure information transmitted by the UE;
if the apparatus is the SeNB, determining that the UE fails to configure the SCG, upon reception of the SCG reconfiguration failure information transmitted by the MeNB, wherein the SCG reconfiguration failure information transmitted by the MeNB is transmitted by the MeNB to the apparatus upon reception of SCG reconfiguration failure information transmitted by the UE.

Optionally, the processing unit is configured to determine that the UE fails to configure the SCG and to trigger the lastly transmitted original SCG configuration information to be maintained, upon determining that the MCG is configured successfully by:
if the apparatus is the MeNB, then after it is determined that the UE fails to configure the SCG, if it is determined that the MCG is configured successfully, applying successfully configured MCG configuration information, and transmitting the SCG reconfiguration failure information to the SeNB to trigger the SeNB to maintain the lastly transmitted original SCG configuration information; or after it is determined that the UE fails to configure the SCG, maintaining original MCG configuration information, and transmitting the SCG reconfiguration failure information to the SeNB to trigger the SeNB to maintain the lastly transmitted original SCG configuration information; or
if the apparatus is the SeNB, determining that the UE fails to configure the SCG, and maintaining the lastly transmitted original SCG configuration information upon determining that the MCG is configured successfully.

Optionally, the processing unit is configured to determine that the UE fails to configure the SCG, and to trigger the SCG to be released, upon determining that the MCG is configured successfully by:
if the apparatus is the MeNB, then after it is determined that the UE fails to configure the SCG, if it is determined that the MCG is configured successfully, applying successfully configured MCG configuration information, and to transmit the SCG reconfiguration failure information to the SeNB to trigger the SeNB to release the SCG; or after it is determined that the UE fails to configure the SCG, maintaining original MCG configuration information, and transmitting the SCG reconfiguration failure information to the SeNB to trigger the SeNB to release the SCG; or
if the apparatus is the SeNB, determining that the UE fails to configure the SCG, and releasing the SCG upon determining that the MCG is configured successfully.

Optionally, the processing unit is further configured:
to obtain a corresponding SCG configuration failure reason based upon the SCG reconfiguration failure information, and to trigger corresponding new SCG configuration information to be reset and retransmitted, based upon the SCG configuration failure reason.

Optionally, the processing unit is configured to trigger the corresponding new SCG configuration information to be reset and retransmitted, based upon the SCG configuration failure reason by:
if the apparatus is the MeNB, transmitting the SCG configuration failure reason to the SeNB triggering the SeNB to reset the new SCG configuration information based upon the SCG configuration failure reason, and transmitting the new SCG configuration information to the apparatus, so that the apparatus transmits it to the UE, or triggering the SeNB to reset the new SCG configuration information based upon the SCG configuration failure reason, and transmitting the new SCG configuration information to the UE;
if the apparatus is the SeNB, upon reception of the SCG configuration failure reason transmitted by the MeNB, triggering directly the new SCG configuration information to be reset locally based upon the SCG configuration failure reason, and transmitting the new SCG configuration information to the MeNB, so that the MeNB transmits it to the UE, or transmitting the new SCG configuration information directly to the UE.

Optionally, the processing unit is configured to trigger the new SCG configuration information to be reset, based upon the SCG configuration failure reason by triggering the SeNB to perform any one of the following operations:
if the SCG configuration failure reason is determined as scg-ConfigurationFailure, the SeNB will reset the new SCG configuration information in a preset manner;
if the SCG configuration failure reason is determined as UECapability-Exceeded, the SeNB will renegotiate with the MeNB, and after a UE capability is reevaluated, the SeNB will reset the new SCG configuration information according to an evaluation result; and
if the SCG configuration failure reason is determined as ParseError or ParameterError, the SeNB will adjust unsuccessfully configured SCG configuration information correspondingly, and reset the new SCG configuration information according to an adjustment result.

An apparatus for configuring a cell, the apparatus being applicable to a scenario where a Master eNB (MeNB) and a Secondary eNB (SeNB) inter-work with each other, and the apparatus including:
a configuring unit configure a Secondary Cell Group (SCG) according to SCG configuration information transmitted by the network side;
a communicating unit configured to transmit SCG reconfiguration failure information to the network side upon determining that the SCG fails to be configured; and
a processing unit configured to maintain original SCG configuration information lastly transmitted by the network side, or to release the SCG, upon determining that a Master Cell Group (MCG) is configured successfully.

Optionally, the processing unit is configured to maintain the original SCG configuration information lastly transmitted by the network side, or to release the SCG, upon determining that the MCG is configured successfully by:
if MCG configuration information transmitted by the network side is further received, and it is determined that the MCG is configured successfully, applying the successfully configured MCG configuration information, and maintaining the lastly transmitted original SCG configuration information, or to release the SCG;
if no MCG configuration information transmitted by the network side is received, maintaining original MCG configuration information lastly transmitted by the network side, and maintaining the lastly transmitted original SCG configuration information, or releasing the SCG

Optionally, the communicating unit is configured to transmit the SCG reconfiguration failure information to the network side by:
determining an SCG configuration failure reason, generating the corresponding SCG reconfiguration failure information based upon the SCG configuration failure reason, and transmitting the SCG reconfiguration failure information to the network side.

Optionally, the communicating unit is configured to determine the SCG configuration failure reason by determining the SCG configuration failure reason as any one of:
scg-ConfigurationFailure;
UECapability-Exceeded;
ParseError; and
ParameterError.

An apparatus for configuring a cell, the apparatus comprising a processor, a transceiver, and a memory, wherein:
the processor is configured to read and execute program in the memory:
   to transmit Secondary Cell Group (SCG) configuration information, or to receive SCG reconfiguration failure information, through the transceiver;
   to trigger the SCG configuration information to be set;
   to trigger the SCG configuration information to be transmitted to a User Equipment (UE) to configure an SCG; and
   to determine that the UE fails to configure the SCG, upon reception of the SCG reconfiguration failure information, and to trigger lastly transmitted original SCG configuration information to be maintained, or to trigger the SCG to be released, upon determining that a Master Cell Group (MCG) is configured successfully; and
the transceiver is configured to receive and transmit data under the control of the processor.

Optionally, the processor is configured to trigger the SCG configuration information to be set by:
if the apparatus is the MeNB, triggering the SeNB to set the corresponding SCG configuration information for the UE;
if the apparatus is the SeNB, directly triggering the corresponding SCG configuration information to be set locally for the UE.

Optionally, the processor is configured to trigger the SCG configuration information to be transmitted to the UE by:
if the apparatus is the MeNB, transmitting locally set MCG configuration information, and the SCG configuration information set by the SeNB to the UE using a first message; or transmitting only the SCG configuration information set by the SeNB to the UE using a first message;
if the apparatus is the SeNB, transmitting the locally set SCG configuration information directly to the UE using a first message.

Optionally, the processor is configured to determine that the UE fails to configure the SCG, upon reception of the SCG reconfiguration failure information by:
if the apparatus is the MeNB, determining that the UE fails to configure the SCG, upon direct reception of the SCG reconfiguration failure information transmitted by the UE;
if the apparatus is the SeNB, determining that the UE fails to configure the SCG, upon reception of the SCG reconfiguration failure information transmitted by the MeNB, wherein the SCG reconfiguration failure information transmitted by the MeNB is transmitted by the MeNB to the apparatus upon reception of SCG reconfiguration failure information transmitted by the UE.

Optionally, the processor is configured to determine that the UE fails to configure the SCG, and to trigger the lastly transmitted original SCG configuration information to be maintained, upon determining that the MCG is configured successfully by:
if the apparatus is the MeNB, then after it is determined that the UE fails to configure the SCG, if it is determined that the MCG is configured successfully, applying successfully configured MCG configuration information, and transmitting the SCG reconfiguration failure information to the SeNB to trigger the SeNB to maintain the lastly transmitted original SCG configuration information; or after it is determined that the UE fails to configure the SCG, maintaining original MCG configuration information, and transmitting the SCG reconfiguration failure information to the SeNB to trigger the SeNB to maintain the lastly transmitted original SCG configuration information; or
if the apparatus is the SeNB, determining that the UE fails to configure the SCG, and maintaining the lastly transmitted original SCG configuration information upon determining that the MCG is configured successfully.

Optionally, the processor is configured to determine that the UE fails to configure the SCG, and to trigger the SCG to be released, upon determining that the MCG is configured successfully by:
if the apparatus is the MeNB, then after it is determined that the UE fails to configure the SCG, if it is determined that the MCG is configured successfully, applying successfully configured MCG configuration information, and transmitting the SCG reconfiguration failure information to the SeNB to trigger the SeNB to release the SCG; or after it is determined that the UE fails to configure the SCG, maintaining original MCG configuration information, and transmitting the SCG reconfiguration failure information to the SeNB to trigger the SeNB to release the SCG; or
if the apparatus is the SeNB, determining that the UE fails to configure the SCG, and releasing the SCG upon determining that the MCG is configured successfully.

Optionally, the processor is further configured:
to obtain a corresponding SCG configuration failure reason based upon the SCG reconfiguration failure information, and to trigger corresponding new SCG configuration information to be reset and retransmitted, based upon the SCG configuration failure reason.

Optionally, the processor is configured to trigger the corresponding new SCG configuration information to be reset and retransmitted, based upon the SCG configuration failure reason by:
if the apparatus is the MeNB, transmitting the SCG configuration failure reason to the SeNB to trigger the SeNB to reset the new SCG configuration information based upon the SCG configuration failure reason, and transmitting the new SCG configuration information to the apparatus, so that the apparatus transmits it to the UE, or triggering the SeNB to reset the new SCG configuration information based upon the SCG configuration failure reason, and transmitting the new SCG configuration information to the UE;
if the apparatus is the SeNB, upon reception of the SCG configuration failure reason transmitted by the MeNB, triggering directly the new SCG configuration information to be reset locally based upon the SCG configuration failure reason, and transmitting the new SCG configuration information to the MeNB, so that the MeNB transmits it to the UE, or transmitting the new SCG configuration information directly to the UE.

Optionally, the processor is configured to trigger the new SCG configuration information to be reset, based upon the SCG configuration failure reason by triggering the SeNB to perform any one of the following operations:
if the SCG configuration failure reason is determined as scg-ConfigurationFailure, resetting the new SCG configuration information in a preset manner;
if the SCG configuration failure reason is determined as UECapability-Exceeded, renegotiating with the MeNB, and after a UE capability is reevaluated, resetting the new SCG configuration information according to an evaluation result;
if the SCG configuration failure reason is determined as ParseError or ParameterError, adjusting unsuccessfully configured SCG configuration information correspondingly, and resetting the new SCG configuration information according to an adjustment result.

An apparatus for configuring a cell, the apparatus comprising a processor, a transceiver, and a memory, wherein:
the processor is configured to read and execute program in the memory 132:
   to transmit Secondary Cell Group (SCG)reconfiguration failure information, or to receive SCG configuration information, through the transceiver;
   to configure an SCG according to the SCG configuration information transmitted by the network side;
   to transmit SCG reconfiguration failure information to the network side upon determining that the SCG fails to be configured; and
   to maintain original SCG configuration information lastly transmitted by the network side, or to release the SCG, upon determining that a Master Cell Group (MCG) is configured successfully; and
the transceiver is configured to receive and transmit data under the control of the processor.

Optionally, the processor is configured to maintain the original SCG configuration information lastly transmitted by the network side, or to release the SCG, upon determining that the MCG is configured successfully by:
if MCG configuration information transmitted by the network side is further received, and it is determined that the MCG is configured successfully, applying the successfully configured MCG configuration information, and maintaining the lastly transmitted original SCG configuration information, or releasing the SCG;
if no MCG configuration information transmitted by the network side is received, maintaining lastly transmitted original MCG configuration information by the network side, and maintaining the lastly transmitted original SCG configuration information, or releasing the SCG

Optionally, the processor is configured to transmit the SCG reconfiguration failure information to the network side by:
determining an SCG configuration failure reason, generating the corresponding SCG reconfiguration failure information based upon the SCG configuration failure reason, and transmitting the SCG reconfiguration failure information to the network side through the transceiver.

Optionally, the processor is configured to determine the SCG configuration failure reason by determining the SCG configuration failure reason as any one of:
scg-ConfigurationFailure;
UECapability-Exceeded;
ParseError; and
ParameterError.

Advantageous effects of the invention are as follows.

In the scenario where an MeNB and an SeNB interoperate with each other, a first eNB transmits SCG configuration information to a UE to configure an SCG, and the UE transmits SCG reconfiguration failure information to the network side upon determining that the SCG fails to be configured; and at this time, the UE and the network side maintain lastly transmitted original SCG configuration information, or release the SCG, upon determining that an MCG is configured successfully, that is, in the case that only the SCG fails to be configured, the original SCG configuration information is applied instead of initiating an RRC re-setup procedure frequently, so that data can be avoided in effect from being interrupted seriously, and the user equipment can communicate normally, thus improving the efficiency of transmitting the data, guaranteeing the performance of the system, and improving a user experience.

### Brief Description of the Drawings

Fig. 1 is a schematic diagram of the dual-connectivity technology in the LTE-A system in the prior art.
Fig. 2a and Fig. 2b are schematic diagrams of tight inter-working between the LTE system and the NR in the 5G system in the prior art.
Fig. 3 is a protocol architectural diagram of tight inter-working between the LTE system and the NR in the 5G system in the prior art.
Fig. 4 is a flow chart of configuring a cell according to an embodiment of the invention.
Fig. 5 is a flow chart of processing in the case that an MeNB transmits SCG configuration information, and "scg-ConfigurationFailure" happens with a UE according to an embodiment of the invention.
Fig. 6 is a flow chart of processing in the case that an MeNB transmits SCG configuration information, and "ParseError" happens with a UE according to an embodiment of the invention.
Fig. 7 is a flow chart of processing in the case that an MeNB transmits SCG configuration information, and a "ParameterError" happens with a UE according to an embodiment of the invention.
Fig. 8 is a flow chart of processing in the case that an MeNB transmits SCG configuration information, and "UECapability-Exceeded" happens with a UE according to an embodiment of the invention.
Fig. 9 is a flow chart of processing for an SeNB to release an SCG in the case that an MeNB transmits SCG configuration information, and an "SCG configuration failure" happens with a UE according to an embodiment of the invention.
Fig. 10 is a first schematic functionally-structural diagram of a first eNB according to an embodiment of the invention.
Fig. 11 is a first schematic functionally-structural diagram of a UE according to an embodiment of the invention.
Fig. 12 is a second schematic functionally-structural diagram of a first eNB according to an embodiment of the invention.
Fig. 13 is a second schematic functionally-structural diagram of a UE according to an embodiment of the invention.

### Detailed Description of the Embodiments

In order to avoid data from being seriously interrupted, and to enable a user equipment to communicate normally, there is devised in the embodiments of the invention a solution to configuring a cell, and in this solution, in the scenario where an MeNB and an SeNB interoperate with each other, the UE transmits SCG reconfiguration failure information to the network side upon determining that an SCG fails to be configured, and at this time, both the UE and the network side maintain lastly transmitted original SCG configuration information upon determining an MCG is configured successfully.

Preferable embodiments of the invention will be described below in details with reference to the drawings.

As illustrated in Fig. 2a and Fig. 2b, a scenario where an LTE system and an NR inter-work tightly with each other in a 5G system will be described in an embodiment of the invention by way of an example.

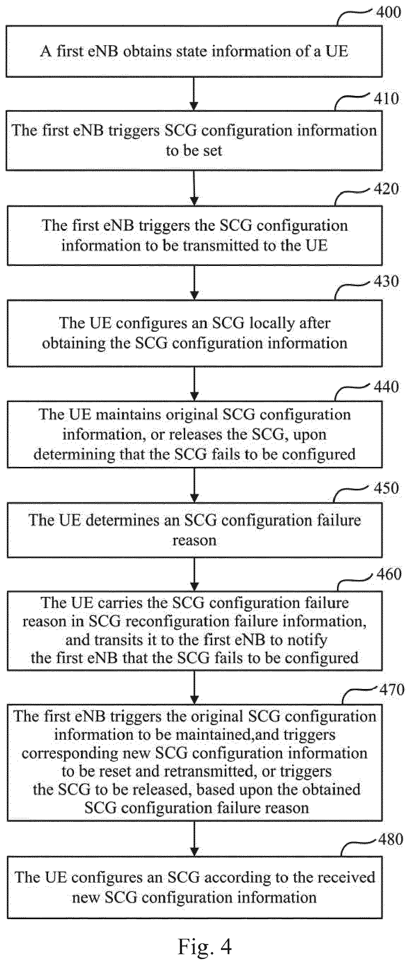

In the scenario above, as illustrated in Fig. 4, an eNB (which may be an MeNB or an SeNB) instructs a UE to configure a cell in the following detailed flow.

In the step 400, a first eNB obtains state information of a UE, where the state information of the UE can include a number of parameters, e.g., capability information of the UE, radio resource configuration information of the UE, etc.

In the embodiment of the invention, the first eNB can be a macro eNB, e.g., an LTE eNB, a 5G NR NB, etc.; or can be a small eNB, e.g., a Low Power Node (LPN), a pico eNB, a home (femto) eNB, etc., an Access Point (AP), etc.; or can be a network node including a Central Unit (CU), and a plurality of Transmission and Reception Points (TRPs) managed and controlled by the CU. There is one or more cells (different frequencies, or sectors into which a cell is split) served by an eNB. Both the macro eNB and the small eNB can be a Master eNB, i.e., an MeNB, or can be a Secondary eNB, i.e., an SeNB.

In the embodiment of the invention, the first eNB can perform the step 400 in the following implementations without any limitation thereto.

In an implementation A1, if the first eNB is the MeNB, then it may determine the state information of the UE directly according to a report of the UE (e.g., a measurement report, a reported traffic condition, a reported bearer type, etc.).

In an implementation B1, if the first eNB is the SeNB, then it may obtain the state information of the UE according to a notification of the MeNB, or the first eNB may determine the state information of the UE directly according to a report of the UE (e.g., a measurement report, a reported traffic condition, a reported bearer type, etc.).

In the step 410, the first eNB triggers SCG configuration information to be set.

In the embodiment of the invention, the first eNB can perform the step 410 in the following implementations without any limitation thereto.

In an implementation A2, if the first eNB is the MeNB, then the first eNB will transmit the state information of the UE to the SeNB to trigger the SeNB to set the corresponding SCG configuration information based upon the state information of the UE.

In an implementation B2, if the first eNB is the SeNB, then the first eNB will directly trigger the corresponding SCG configuration information to be set locally, based upon the obtained state information of the UE.

In the step 420, the first eNB triggers the SCG configuration information to be transmitted to the UE.

In the embodiment of the invention, the first eNB typically triggers this using a first message (which can be an RRC message, and the same will apply hereinafter, so a repeated description thereof will be omitted), and correspondingly the first eNB can perform the step 420 in the following implementations without any limitation thereto.

In an implementation A3, if the first eNB is the MeNB, then the first eNB may transmit both locally set MCG configuration information and the obtained SCG configuration information to the UE using an RRC message; or it may transmit only the obtained SCG configuration information to the UE using an RRC message, and at this time, the UE will reconfigure an SCG, and maintain original MCG configuration information.

Particularly. the MeNB generates a new RRC message (e.g., an RRC Connection Reconfiguration message, etc.), where the RRC message includes the SCG configuration information generated by the SeNB (e.g., ASN.1 of the SCG configuration information), and the locally set MCG configuration information, and the MeNB transmits the RRC message to the UE on a primary bearer (e.g., an SRB1); or an MCG can add a field, for transmitting the SCG configuration information, to an original RRC message, and for example, add an Information Element (IE), for transmitting the SCG configuration information, to a DL Information Transfer message, using a container.

In an implementation B3, if the first eNB is the SeNB, then the first eNB may transmit the locally generated SCG configuration information directly to the UE using an RRC message.

Particularly. the SeNB generates an RRC message, where the RRC message includes the SCG configuration information generated by an SCG, and the SeNB transmits the RRC message to the UE on a secondary bearer.

While the SeNB is transmitting the SCG configuration information, the MeNB may also transmit the MCG configuration information which is set by the MeNB to the UE, and if the UE obtains both the MCG configuration information and the SCG configuration information, then it may reconfigure an MCG and the SCG respectively; and if the UE obtains only the SCG configuration information, then the UE will reconfigure the SCG, and maintain original MCG configuration information.

In the step 430, the UE configures an SCG locally after obtaining the SCG configuration information.

As can be apparent from the description above, if the UE obtains the MCG configuration information and the SCG configuration information from the RRC message transmitted by the MeNB, or if the UE obtains the MCG configuration information from the RRC message transmitted by the MeNB, and the SCG configuration information from the RRC message transmitted by the SeNB, then the UE will reconfigure the MCG and the SCG respectively; and
if the UE obtains only the SCG configuration information from the RRC message transmitted by the SeNB, then the UE will reconfigure the SCG, and also maintain the original MCG configuration information.

In the step 440, the UE maintains original SCG configuration information, or releases the SCG, upon determining that the SCG fails to be configured.

In the embodiment of the invention, the original SCG configuration information is SCG configuration information which was lastly obtained by the UE, i.e., SCG configuration information which is currently being used by the UE, and after the UE determines that the SCG fails to be configured, the UE reuses the lastly configured original SCG configuration information or releases the SCG instead of performing an RRC re-setup procedure upon determining that the MCG is configured successfully.

The MCG is configured successfully in two instances: in a first instance, the UE obtains the MCG configuration information, and configures the MCG successfully, and at this time, both the MeNB and the UE apply the successfully configured MCG configuration; and in a second instance, the MeNB does not transmit any MCG configuration information to the UE, and at this time, both the MeNB and the UE maintain the original MCG configuration information; and in both the instances, the UE maintains the original SCG configuration information, or releases the SCG, as long as the SCG fails to be configured.

Particularly, the step 440 can be performed in the following three instances.

In a first instance, the UE obtains the MCG configuration information and the SCG configuration information from the RRC message transmitted by the MeNB, and since the RRC message includes both of the two pieces of configuration information, the UE processes firstly the MCG configuration information and then the SCG configuration information according to their default priorities.

If the MCG fails to be configured, then the UE will instruct the MCG to perform an RRC re-setup procedure directly, and this instance will not be involved in the embodiment of the invention, so a detailed description thereof will be omitted.

If the MCG is configured successfully, and the SCG fails to be configured, then the UE will apply the new MCG configuration information, and maintain the original SCG configuration information, or release the SCG

In a second instance, the UE obtains the SCG configuration information from the RRC message transmitted by the MeNB, where the RRC message includes only the SCG configuration information, that is, the UE maintains the original MCG configuration information no matter whether the SCG is configured successfully, so when the SCG fails to be configured, the UE maintains the original MCG configuration information, but also maintains the original SCG configuration information, or releases the SCG

In a third instance, the UE obtains the SCG configuration information from the RRC message transmitted by the SeNB.

Then when the SCG fails to be configured, the UE does not apply the new SCG configuration information, but maintains the original SCG configuration information, or releases the SCG.

In the step 450, the UE determines an SCG configuration failure reason.

In the embodiment of the invention, the SCG configuration failure reason includes but will not be limited to the following reasons.

A first reason particularly describes "UECapability-Exceeded". "UECapability-Exceeded" can refer to that some parameter in the SCG configuration information received by the UE exceeds an access capability of the UE, and for example, the maximum Context Identifier (maxCID) of a context identifier in a Packet Data Convergence Protocol (PDCP) configuration exceeds the maximum content identifier of a robust header compression context indicated in the capability information of the UE.

A second reason particularly describes "ParseError". "ParseError" can refer to that the UE cannot parse the received SCG configuration information from some component correctly, and the ASN.1 in the SCG configuration information cannot be recognized by the UE, or the IE added to the DL informationTransfer message cannot be recognized by the UE.

A third reason particularly describes "ParameterError". "ParameterError" can refer to that there is an error of a configuration parameter in the SCG configuration information received by the UE, and for example, some configuration parameter of the SCG in the UE ranges from 0 to 100, but the value of this parameter in the SCG configuration information received by the UE is 200.

A fourth reason generally describes "scg-ConfigurationFailure". "scg-ConfigurationFailure" can refer to that the particular SCG configuration failure reason is not particularly distinguished, but the SCG configuration failure reason is generally described as a "SCG configuration failure".

In the step 460, the UE carries the SCG configuration failure reason in SCG reconfiguration failure information, and transits it to the first eNB to notify the first eNB that the SCG fails to be configured.

In the embodiment of the invention, the UE can generate the corresponding SCG reconfiguration failure information based upon the determined SCG configuration failure reason, and further transmits the SCG reconfiguration failure information to the first eNB, and particularly the UE can perform the step 460 in the following implementations without any limitation thereto.

In an implementation A4, if the first eNB is the MeNB, then the UE may carry the SCG reconfiguration failure information carrying the SCG configuration failure reason directly to the first eNB.

In an implementation B4, if the first eNB is the SeNB, then the UE may firstly transmit the SCG reconfiguration failure information carrying the SCG configuration failure reason to the MeNB, and then the SeNB will further receive the SCG reconfiguration failure information, carrying the SCG configuration failure reason, transmitted by the MeNB, where the SCG reconfiguration failure information transmitted by the MeNB is transmitted by the MeNB upon reception of the SCG reconfiguration failure information transmitted by the UE, and is information generated separately by the MeNB in a communication protocol between the MeNB and the SeNB based upon the SCG reconfiguration failure information transmitted by the UE.

In both the two instances, the UE transmits the SCG reconfiguration failure information to the MeNB on a primary carrier (e.g., an SRB1), where the SCG reconfiguration failure information transmitted via an air interface can be a separate RRC message, or can be an IE in an original RRC message, and the SCG reconfiguration failure information in either of the two forms includes the SCG configuration failure reason.

Particularly, in the embodiment of the invention, the UE can describe the SCG configuration failure reason in the SCG reconfiguration failure information in the following two schemes without any limitation thereto.

In a first scheme, the reason is generally described.

Here the UE generally describes the SCG configuration failure reason in the SCG reconfiguration failure information as a SCG reconfiguration failure (scg-ReconfigurationFailure).

In a second scheme, the reason is particularly described.

Here the UE describes the SCG configuration failure reason in the SCG reconfiguration failure information as one of particular categories of failure reasons, e.g., "UECapability-Exceeded", "ParseError", and "ParameterError".

In the step 470, the first eNB triggers the original SCG configuration information to be maintained, and triggers corresponding new SCG configuration information to be reset and retransmitted, or triggers the SCG to be released, based upon the obtained SCG configuration failure reason.

The first eNB also automatically triggers the original SCG configuration information (i.e., the lastly configured SCG configuration information), or to triggers the SCG to be released, instead of triggering an RRC re-setup procedure to be further applied, upon determining that the transmitted SCG configuration information fails to be set.

In a first example, when the first eNB is the MeNB, the first eNB determines that the MCG is configured successfully, and the SCG fails to be configured, upon reception of the SCG reconfiguration failure information transmitted by the UE, and at this time, the first eNB applies the successfully configured MCG configuration information, and transmits SCG reconfiguration failure information to the SeNB to trigger the SeNB to maintain the original SCG configuration information, or to trigger the SeNB to release the SCG; or the first eNB determines that the MCG is not configured, and the SCG fails to be configured, upon reception of the SCG reconfiguration failure information transmitted by the UE (at this time, the MCG configuration information may not be transmitted), and at this time, the first eNB maintains the original MCG configuration information, and transmits SCG reconfiguration failure information to the SeNB to trigger the SeNB to maintain the original SCG configuration information, or to trigger the SeNB to release the SCG

In a second example, when the first eNB is the SeNB, the first eNB determines that the SCG fails to be configured, upon reception of the SCG reconfiguration failure information transmitted by the MeNB, and maintains the lastly transmitted original SCG configuration information, or releases the SCG, upon determining that the MCG is configured successfully, where the configuration information, transmitted by the MeNB, received by the first eNB is transmitted by the MeNB to the first eNB upon reception of the SCG reconfiguration information transmitted by the UE, where when the first eNB determines that the MCG is configured successfully, it indicates that the MeNB does not instruct the first eNB to trigger an RRC re-setup procedure, and at this time, no matter whether the MeNB applies the new MCG configuration information, or maintains the original MCG configuration information, the first eNB determines that the MCG is configured successfully at this time as long as the first eNB does not receive any instruction to trigger an RRC re-setup procedure.

Particularly, in the embodiment of the invention, the first eNB can trigger the corresponding new SCG configuration information to be reset and retransmitted, in the following implementations without any limitation thereto.

In an implementation A5, if the first eNB is the MeNB, then the first eNB will transmit the obtained SCG configuration failure reason to the SeNB, the SeNB will reset the new SCG configuration information based upon the SCG configuration failure reason, and then transmit the new SCG configuration information to the MeNB, and the MeNB will further transmit it to the UE, or the SeNB can transmit the new SCG configuration information directly to the UE.

In an implementation B5, if the first eNB is the SeNB, then the first eNB will reset the new SCG configuration information locally based upon the SCG configuration failure reason transmitted by the MeNB will upon reception of the SCG configuration failure reason, and then transmit the new SCG configuration information to the MeNB, and the MeNB will transmit it to the UE, or the first eNB may transmit the new SCG configuration information directly to the UE.

In the implementations A5 and B5, if the new SCG configuration information is transmitted by the MeNB, then the MeNB will transmit the new SCG configuration information using the successfully configured MCG configuration information if the MCG is configured successfully, or will transmit the new SCG configuration information using the original MCG configuration information if the MCG is not changed, as described in the first example or the second example.

Alike in the implementations A5 and B5, if the new SCG configuration information is transmitted by the SeNB, then the SeNB will transmit the new SCG configuration information using the original SCG configuration information upon determining that the SCG fails to be configured, as described in the first example or the second example.

On the other hand, the SCG configuration information can be reset in the following two instances without any limitation thereto.

In a first instance, the failure reason as a result of parsing is generally described "scg-ReconfigurationFailure", so the SeNB resets the new SCG configuration information in a preset manner.

For example, the SeNB reconfigures the new SCG configuration information after renegotiating with the MeNB.

In another example, the SeNB adjusts the lastly transmitted SCG configuration information, and then generates the new SCG configuration information.

The SeNB can operate in either of the examples above as needed in an application environment.

In a second instance, the failure reason as a result of parsing is particularly described "UECapability-Exceeded", "ParseError", or "ParameterError", so the SCG configuration information can be reset according to the particular reason.

Here the particularly described failure reason can be further categorized into two categories.

In a first category, if the failure reason as a result of parsing is that the original SCG configuration exceeds a UE capability, then a UE capability negotiation session will be initiated between the SeNB and the MeNB to renegotiate about the UE capability, and the first eNB will further set corresponding new SCG configuration information after the UE capability is newly determined.

In a second category, if the failure reason as a result of parsing is that the UE cannot parse the original SCG configuration information, or there is a parameter error in the original SCG configuration information, then the original SCG configuration information will be adjusted correspondingly (for example, the SCG configuration information will be re-encoded, a parameter will be reset, etc.) to generate new SCG configuration information.

In the step 480, the UE configures an SCG according to the received new SCG configuration information.

In this way, the UE can obtain the new SCG configuration information, and configure the SCG based upon the new SCG configuration information, and after the SCG is configured, the UE can transmit data with the network side using the new SCG configuration information.

Further to the embodiment above, the embodiment above will be described below in further details in connection with particular application scenarios thereof.

In a first scenario, the MeNB transmits SCG configuration information, and "scg-ConfigurationFailure" happens with the UE.

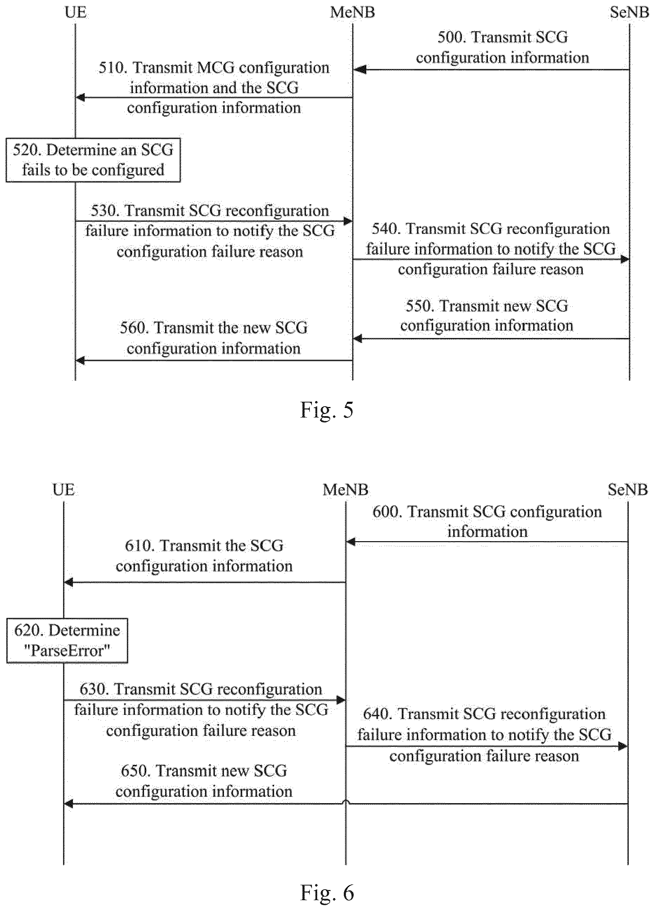

As illustrated in Fig. 5, a particular flow in the first scenario is as follows.

In the step 500, the SeNB transmits SCG configuration information to the MeNB.

Particularly, the SeNB can firstly obtain state information of the UE, and then set the corresponding SCG configuration information based upon the state information of the UE, and for example, compiles it into ASN.1 of the SCG configuration information using an Abstract Semantic Notation (ASN), and transmits the generated SCG configuration information to the MeNB.

In the step 510, the MeNB transmits MCG configuration information and the SCG configuration information to the UE.

The MeNB receives the SCG configuration information from the SeNB, generates an RRC message from the SCG configuration information together with the locally set MCG configuration information, and transmits the RRC message to the UE on a primary bearer (e.g., an SRB1).

In the step 520, the UE determines that an SCG fails to be configured.

The UE obtains the MCG configuration information and the SCG configuration information from the RRC message transmitted by the MeNB, and since the RRC message includes both of the two pieces of configuration information, the UE processes firstly the MCG configuration information and then the SCG configuration information according to their default priorities. At this time, if an MCG is configured successfully, and the SCG fails to be configured, then the UE will apply the successfully configured MCG configuration information, maintain original SCG configuration information, and determine an SCG configuration failure reason.

Particularly, the SCG configuration failure reason includes four reasons, i.e., generally described "scg-ConfigurationFailure", and particularly described "UECapability-Exceeded", "ParseError", and "ParameterError". In this scenario, the SCG configuration failure reason is "scg-ConfigurationFailure", for example, so the UE determines the SCG configuration failure reason as generally described "scg-ConfigurationFailure".

In the step 530, the UE transmits SCG reconfiguration failure information to the MeNB to notify it of the SCG configuration failure reason.

The UE transmits the SCG reconfiguration failure information to the MeNB in a separate RRC message on a primary bearer (e.g., an SRB1) upon determining that the SCG fails to be configured, where the RRC message includes the SCG configuration failure reason, i.e., generally described "scg-ConfigurationFailure".

In the step 540, the MeNB transmits SCG reconfiguration failure information to the SeNB to notify it of the SCG configuration failure reason.

The MeNB receives the SCG reconfiguration failure information transmitted by the UE, and transmits the SCG reconfiguration failure information to the SeNB, where the SCG reconfiguration failure information includes the SCG configuration failure reason, i.e., generally described "scg-ConfigurationFailure".

In the step 550, the SeNB transmits new SCG configuration information to the MeNB.

Upon reception of the SCG reconfiguration failure information transmitted by the MeNB, the SeNB renegotiates with the MeNB according to the failure reason "scg-ReconfigurationFailure", and after a capability of the UE is reevaluated, the SeNB generates corresponding new SCG configuration information, and transmits the new SCG configuration information to the MeNB.

In the step 560, the MeNB transmits the new SCG configuration information to the UE.

The MeNB generates an RRC Connection Reconfiguration message upon reception of the new SCG configuration information, where the RRC Connection Reconfiguration message includes the new SCG configuration information, and since the UE has configured the MCG configuration information successfully in the step 520, the MeNB transmits the RRC Connection Reconfiguration message at this time using the successfully configured MCG configuration information, and the MeNB transmits the RRC Connection Reconfiguration message to the UE on a primary bearer (e.g., an SRB1).

In this way, the UE can obtain the new SCG configuration information, and configure the SCG based upon the new SCG configuration information, and after the SCG is configured, the UE can transmit data with the network side using the new SCG configuration information.

Of course, the SeNB can alternatively transmit the new SCG configuration information directly to the UE, and the process has been described as above only by way of an example; and when the SeNB transmits the new SCG configuration information directly, if the UE maintains the original SCG configuration information in the step 520, then the SeNB will apply the original SCG configuration information, and transmit an RRC message carrying the new SCG configuration information to the UE on a secondary bearer, e.g., an SRB3.

In a second scenario, the MeNB transmits SCG configuration information, and "ParseError" happens with the UE.

As illustrated in Fig. 6, a particular flow in the second scenario is as follows.

In the step 600, the SeNB transmits SCG configuration information to the MeNB.

Particularly, the SeNB can firstly obtain state information of the UE, and then set the corresponding SCG configuration information based upon the state information of the UE, and for example, compiles it into ASN.1 of the SCG configuration information using an ASN, and transmits the generated SCG configuration information to the MeNB.

In the step 610, the MeNB transmits the SCG configuration information to the UE.

The MeNB receives the SCG configuration information from the SeNB, and transmits the SCG configuration information to the UE on a primary bearer (e.g., an SRB1), and in the embodiment of the invention, the MeNB does not transmit MCG configuration information to the UE, so the UE maintains original MCG configuration information.

In the step 620, the UE determines that an SCG fails to be configured.

The UE obtains MCG configuration information from the MeNB, and if the SCG fails to be configured, then the UE will not apply the new SCG configuration information, but maintain the original MCG configuration information, and determine an SCG configuration failure reason.

Particularly, the SCG configuration failure reason includes four reasons, i.e., generally described "scg-ConfigurationFailure", and particularly described "UECapability-Exceeded", "ParseError", and "ParameterError". In this scenario, the SCG configuration failure reason is "ParseError", for example, so the UE determines the SCG configuration failure reason as particularly described "ParseError".

In the step 630, the UE transmits SCG reconfiguration failure information to the MeNB to notify it of the SCG configuration failure reason.

The UE transmits the SCG reconfiguration failure information to the MeNB in a separate RRC message on a primary bearer (e.g., an SRB1) upon determining that the SCG fails to be configured, where the RRC message includes the SCG configuration failure reason, i.e., particularly described "ParseError".

In the step 640, the MeNB transmits SCG reconfiguration failure information to the SeNB to notify it of the SCG configuration failure reason.

The MeNB receives the SCG reconfiguration failure information transmitted by the UE, and transmits the SCG reconfiguration failure information to the SeNB, where the SCG reconfiguration failure information includes the SCG configuration failure reason, i.e., particularly described "ParseError".

In the step 650, the SeNB transmits new SCG configuration information to the UE.

Upon reception of the SCG reconfiguration failure information transmitted by the MeNB, the SeNB adjusts the original SCG configuration information correspondingly (e.g., re-encodes the SCG configuration information, etc.) according to the failure reason "ParseError", generates corresponding new SCG configuration information, and transmits the new SCG configuration information to the UE.

When the SeNB transmits the new SCG configuration information directly to the UE, if the UE maintains the original SCG configuration information in the step 620, then the SeNB will transmit an RRC message carrying the new SCG configuration information to the UE using the original SCG configuration information on a secondary bearer.

In this way, the UE can obtain the new SCG configuration information, and configure the SCG based upon the new SCG configuration information, and after the SCG is configured, the UE can transmit data with the network side using the new SCG configuration information.

Of course, the SeNB can alternatively transmit the new SCG configuration information to the UE through the MeNB, and the process has been described as above only by way of an example; and when the SeNB transmits the new SCG configuration information to the UE through the MeNB, the MeNB generates an RRC Connection Reconfiguration message upon reception of the new SCG configuration information, where the RRC Connection Reconfiguration message includes the new SCG configuration information. If the UE maintains the original MCG configuration information in the step 610, then the MeNB will transmit the RRC Connection Reconfiguration message at this time using still the MCG configuration information, and the MeNB will transmit the RRC Connection Reconfiguration message to the UE on a primary bearer (e.g., an SRB1).

In a third scenario, the SeNB transmits SCG configuration information, and "ParameterError" happens with the UE.

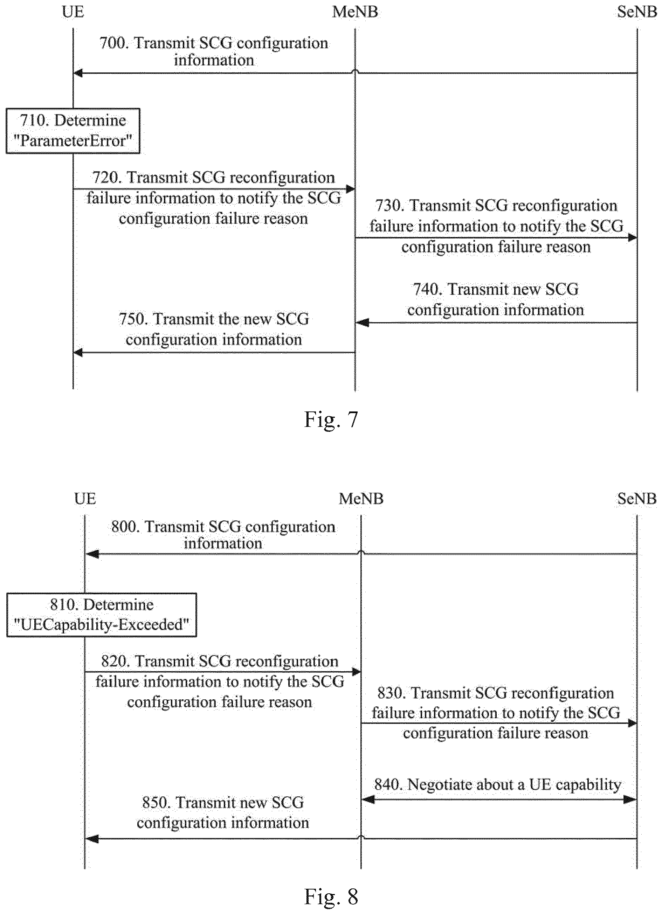

As illustrated in Fig. 7, a particular flow in the third scenario is as follows.

In the step 700, the SeNB transmits SCG configuration information to the UE.

Particularly, the SeNB can firstly obtain state information of the UE, and then set the corresponding SCG configuration information based upon the state information of the UE, and transmits the generated SCG configuration information to the UE.

In the step 710, the UE determines that an SCG fails to be configured.

The UE obtains the SCG configuration information directly from the SeNB, and if the SCG fails to be configured, then the UE will determine an SCG configuration failure reason.

In the embodiment of the invention, the MeNB does not transmit MCG configuration information to the UE, so the UE maintains original MCG configuration information.

Particularly, the SCG configuration failure reason includes four reasons, i.e., generally described "scg-ConfigurationFailure", and particularly described "UECapability-Exceeded", "ParseError", and "ParameterError". In this scenario, the SCG configuration failure reason is "ParameterError", for example, so the UE determines the SCG configuration failure reason as particularly described "ParameterError".

In the step 720, the UE transmits SCG reconfiguration failure information to the MeNB to notify it of the SCG configuration failure reason.

The UE transmits the SCG reconfiguration failure information to the MeNB in a separate RRC message on a primary bearer (e.g., an SRB1) upon determining that the SCG fails to be configured, where the RRC message includes the SCG configuration failure reason, i.e., particularly described "ParameterError".

In the step 730, the MeNB transmits SCG reconfiguration failure information to the SeNB to notify it of the SCG configuration failure reason.

The MeNB receives the SCG reconfiguration failure information transmitted by the UE, and transmits the SCG reconfiguration failure information to the SeNB, where the SCG reconfiguration failure information includes the SCG configuration failure reason, i.e., particularly described "ParameterError".

In the step 740, the SeNB transmits new SCG configuration information to the MeNB.

Upon reception of the SCG reconfiguration failure information transmitted by the MeNB, the SeNB adjusts the original SCG configuration information correspondingly (e.g., resets a new parameter, etc.) according to the failure reason "ParameterError", generates corresponding new SCG configuration information, and transmits the new SCG configuration information to the MeNB.

In the step 750, the MeNB transmits the new SCG configuration information to the UE.

The MeNB generates an RRC Connection Reconfiguration message upon reception of the new SCG configuration information, where the RRC Connection Reconfiguration message includes the new SCG configuration information; and if the UE maintains the original MCG configuration information in the step 710, then the MeNB will transmit the RRC Connection Reconfiguration message at this time using still the MCG configuration information, and the MeNB will transmit the RRC Connection Reconfiguration message to the UE on a primary bearer (e.g., an SRB1).

In this way, the UE can obtain the new SCG configuration information, and configure the SCG based upon the new SCG configuration information, and after the SCG is configured, the UE can transmit data with the network side using the new SCG configuration information.

Of course, the SeNB can alternatively transmit the new SCG configuration information directly to the UE, and the process has been described as above only by way of an example; and when the SeNB transmits the new SCG configuration information directly to the UE, if the UE maintains the original SCG configuration information, then the SeNB will transmit an RRC message carrying the new SCG configuration information to the UE using still the original SCG configuration information on a secondary bearer, e.g., an SRB3.

In a fourth scenario, the SeNB transmits SCG configuration information, and "UECapability-Exceeded" happens with the UE.

As illustrated in Fig. 8, a particular flow in the fourth scenario is as follows.

In the step 800, the SeNB transmits SCG configuration information to the UE.

Particularly, the SeNB can firstly obtain state information of the UE, and then set the corresponding SCG configuration information based upon the state information of the UE, and transmits the generated SCG configuration information to the UE.

In the step 810, the UE determines that an SCG fails to be configured.

The UE obtains the SCG configuration information directly from the SeNB, and if the SCG fails to be configured, then the UE will determine an SCG configuration failure reason.

In the embodiment of the invention, the MeNB does not transmit MCG configuration information to the UE, so the UE maintains original MCG configuration information.

Particularly, the SCG configuration failure reason includes four reasons, i.e., generally described "scg-ConfigurationFailure", and particularly described "UECapability-Exceeded", "ParseError", and "ParameterError". In this scenario, the SCG configuration failure reason is "UECapability-Exceeded", for example, so the UE determines the SCG configuration failure reason as particularly described "UECapability-Exceeded".

In the step 820, the UE transmits SCG reconfiguration failure information to the MeNB to notify it of the SCG configuration failure reason.

The UE transmits the SCG reconfiguration failure information to the MeNB in a separate RRC message on a primary bearer (e.g., an SRB1) upon determining that the SCG fails to be configured, where the RRC message includes the SCG configuration failure reason, i.e., particularly described "UECapability-Exceeded".

In the step 830, the MeNB transmits SCG reconfiguration failure information to the SeNB to notify it of the SCG configuration failure reason.

The MeNB receives the SCG reconfiguration failure information transmitted by the UE, and transmits the SCG reconfiguration failure information to the SeNB, where the SCG reconfiguration failure information includes the SCG configuration failure reason, i.e., particularly described "UECapability-Exceeded".

In the step 840, the SeNB negotiates with the MeNB about a UE capability.

Upon reception of the SCG reconfiguration failure information transmitted by the MeNB, the SeNB renegotiates with the MeNB according to the failure reason "UECapability-Exceeded", and after a capability of the UE is reevaluated, the SeNB generates corresponding new SCG configuration information, and transmits the new SCG configuration information directly to the UE.

In the step 850, the SeNB transmits new SCG configuration information to the UE.

The SeNB generates and transmits the new SCG configuration information directly to the UE, and if the UE maintains the original SCG configuration information, then the SeNB will transmit an RRC message carrying the new SCG configuration information to the UE using still the original SCG configuration information on a secondary bearer, e.g., an SRB3.

In this way, the UE can obtain the new SCG configuration information, and configure the SCG based upon the new SCG configuration information, and after the SCG is configured, the UE can transmit data with the network side using the new SCG configuration information.

Of course, the SeNB can alternatively transmit the new SCG configuration information to the UE through the MeNB, and the process has been described as above only by way of an example; and the MeNB generates an RRC Connection Reconfiguration message upon reception of the new SCG configuration information from the SeNB, where the RRC Connection Reconfiguration message includes the new SCG configuration information. If the UE maintains the original MCG configuration information in the step 810, then the MeNB will transmit the RRC Connection Reconfiguration message at this time using still the MCG configuration information, and the MeNB will transmit the RRC Connection Reconfiguration message to the UE on a primary bearer (e.g., an SRB1).

In all of the four scenarios above, the UE transmits the SCG reconfiguration failure information to the network side upon determining that the SCG fails to be configured, and the UE and the network side maintain the lastly transmitted original SCG configuration information upon determining that the MCG is configured successfully.

As an alternative to the scenarios above, the UE transmits the SCG reconfiguration failure information to the network side upon determining that the SCG fails to be configured, and the UE and the network side can alternatively trigger the SCG to be released, upon determining that the MCG is configured successfully; and at this time, the network side will not transmit any new SCG configuration information.

In a fifth scenario, the MeNB transmits SCG configuration information, and "scg-ReconfigurationFailure" happens with the UE; and the UE transmits SCG reconfiguration failure information to the network side upon determining that an SCG fails to be configured, and the UE and the network side trigger the SCG to be released, upon determining that an MCG is configured successfully.

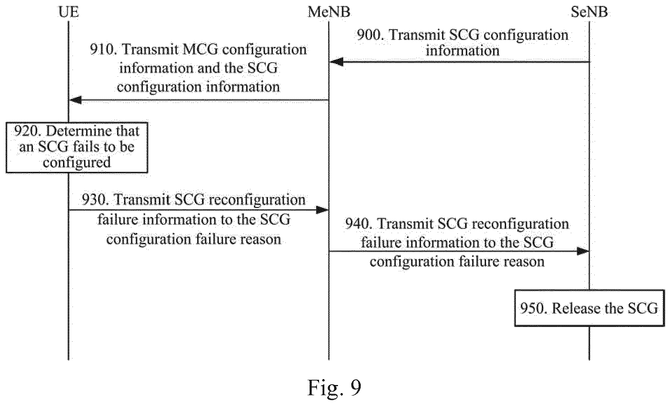

As illustrated in Fig. 9, a particular flow in the fifth scenario is as follows.

In the step 900, the SeNB transmits SCG configuration information to the MeNB.

Particularly, the SeNB can firstly obtain state information of the UE, and then set the corresponding SCG configuration information based upon the state information of the UE, and for example, compiles it into ASN.1 of the SCG configuration information using an Abstract Semantic Notation (ASN), and transmits the generated SCG configuration information to the MeNB.

In the step 910, the MeNB transmits MCG configuration information and the SCG configuration information to the UE.

The MeNB receives the SCG configuration information from the SeNB, generates an RRC message from the SCG configuration information together with the locally set MCG configuration information, and transmits the RRC message to the UE on a primary bearer (e.g., an SRB1).

In the step 920, the UE determines that an SCG fails to be configured.

The UE obtains the MCG configuration information and the SCG configuration information from the RRC message transmitted by the MeNB, and since the RRC message includes both of the two pieces of configuration information, the UE processes firstly the MCG configuration information and then the SCG configuration information according to their default priorities. At this time, if an MCG is configured successfully, and the SCG fails to be configured, then the UE will apply the successfully configured MCG configuration information, determine an SCG configuration failure reason, and release the SCG.

Particularly the SCG configuration failure reason includes four reasons, i.e., generally described "scg-ConfigurationFailure", and particularly described "UECapability-Exceeded", "ParseError", and "ParameterError". In this scenario, the SCG configuration failure reason is "scg-ConfigurationFailure", for example, so the UE determines the SCG configuration failure reason as generally described "scg-ConfigurationFailure".

In the step 930, the UE transmits SCG reconfiguration failure information to the MeNB to notify it of the SCG configuration failure reason.

The UE transmits the SCG reconfiguration failure information to the MeNB in a separate RRC message on a primary bearer (e.g., an SRB1) upon determining that the SCG fails to be configured, where the RRC message includes the SCG configuration failure reason, i.e., generally described "scg-ReconfigurationFailure" .

In the step 940, the MeNB transmits SCG reconfiguration failure information to the SeNB to notify it of the SCG configuration failure reason.

The MeNB receives the SCG reconfiguration failure information transmitted by the UE, and transmits the SCG reconfiguration failure information to the SeNB, where the SCG reconfiguration failure information includes the SCG configuration failure reason, i.e., generally described "scg-ReconfigurationFailure".

In the step 950, the SeNB releases the SCG

Upon reception of the SCG reconfiguration failure information transmitted by the MeNB, the SeNB releases the SCG upon determining that the UE fails to configure the SCG, according to the failure reason "scg-ReconfigurationFailure".

In the second scenario, the third scenario, and the fourth scenario, upon reception of the SCG reconfiguration failure information transmitted by the MeNB, the SeNB releases the SCG instead of transmitting new SCG configuration information upon determining that the UE fails to configure the SCG, according to the failure reason, and this is the same as in the fifth scenario, so a repeated description thereof will be omitted.

In this way, in all the five scenarios above, the SeNB and the MeNB interact with each other via an X2 interface, but in a new application system, the SeNB and the MeNB can alternatively interact via an X1, X3, ..., Xn interface instead of an X2 interface, so a repeated description thereof will be omitted.

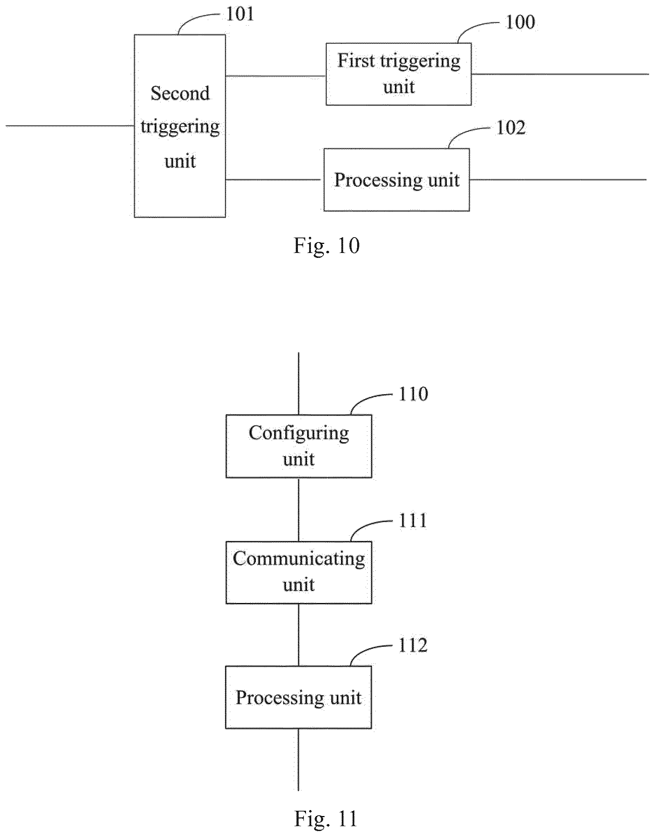

As illustrated in Fig. 10, an embodiment of the invention provides an apparatus for configuring a cell (e.g., a first eNB), which includes at least a first triggering unit 100, a second triggering unit 101, and a processing unit 102, where:
the first triggering unit 100 is configured to trigger Secondary Cell Group (SCG) configuration information to be set;
the second triggering unit 101 is configured to trigger the SCG configuration information to be transmitted to a User Equipment (UE), and to trigger the UE to configure an SCG; and
the processing unit 102 is configured to determine that the UE fails to configure the SCG, upon reception of SCG reconfiguration failure information, and to trigger lastly transmitted original SCG configuration information to be maintained, or to trigger the SCG to be released, upon determining that a Master Cell Group (MCG) is configured successfully.

Optionally, the first triggering unit 100 configured to trigger the SCG configuration information to be set is configured:
if the apparatus is the MeNB, to trigger the SeNB to set the corresponding SCG configuration information for the UE; and
if the apparatus is the SeNB, to directly trigger the corresponding SCG configuration information to be set locally for the UE.

Optionally, the second triggering unit 101 configured to trigger the SCG configuration information to be transmitted to the UE, and to trigger the UE to configure the SCG is configured:
if the apparatus is the MeNB, to transmit locally set MCG configuration information, and the SCG configuration information set by the SeNB to the UE using a first message; or to transmit only the SCG configuration information set by the SeNB to the UE using a first message; and
if the apparatus is the SeNB, to transmit the locally set SCG configuration information directly to the UE using a first message.

Optionally, the processing unit 102 configured to determine that the UE fails to configure the SCG, upon reception of the SCG reconfiguration failure information is configured:
if the apparatus is the MeNB, to determine that the UE fails to configure the SCG, upon direct reception of the SCG reconfiguration failure information transmitted by the UE; and
if the apparatus is the SeNB, to determine that the UE fails to configure the SCG, upon reception of the SCG reconfiguration failure information transmitted by the MeNB, where the received SCG reconfiguration failure information transmitted by the MeNB is transmitted by the MeNB to the apparatus upon reception of SCG reconfiguration failure information transmitted by the UE.

Optionally, the processing unit 102 configured to determine that the UE fails to configure the SCG, and to trigger the lastly transmitted original SCG configuration information to be maintained, upon determining that the MCG is configured successfully:
if the apparatus is the MeNB, then after it is determined that the UE fails to configure the SCG, if it is determined that the MCG is configured successfully, to apply successfully configured MCG configuration information, and to transmit the SCG reconfiguration failure information to the SeNB to trigger the SeNB to maintain the lastly transmitted original SCG configuration information; or after it is determined that the UE fails to configure the SCG, to maintain original MCG configuration information, and to transmit the SCG reconfiguration failure information to the SeNB to trigger the SeNB to maintain the lastly transmitted original SCG configuration information; and
if the apparatus is the SeNB, to determine that the UE fails to configure the SCG, and to maintain the lastly transmitted original SCG configuration information upon determining that the MCG is configured successfully.

Optionally, the processing unit 102 configured to determine that the UE fails to configure the SCG and to trigger the SCG to be released, upon determining that the MCG is configured successfully:
if the apparatus is the MeNB, then after it is determined that the UE fails to configure the SCG, if it is determined that the MCG is configured successfully, to apply successfully configured MCG configuration information, and to transmit the SCG reconfiguration failure information to the SeNB to trigger the SeNB to release the SCG; or after it is determined that the UE fails to configure the SCG to maintain original MCG configuration information, and to transmit the SCG reconfiguration failure information to the SeNB to trigger the SeNB to release the SCG; and
if the apparatus is the SeNB, to determine that the UE fails to configure the SCG, and to release the SCG upon determining that the MCG is configured successfully.

Optionally, the processing unit 102 is further configured:
to obtain a corresponding SCG configuration failure reason based upon the received SCG reconfiguration failure information, and to trigger corresponding new SCG configuration information to be reset and retransmitted, based upon the SCG configuration failure reason.

Optionally, the processing unit 102 configured to trigger the corresponding new SCG configuration information to be reset and retransmitted, based upon the SCG configuration failure reason is configured:
if the apparatus is the MeNB, to transmit the SCG configuration failure reason to the SeNB to trigger the SeNB to reset the new SCG configuration information based upon the SCG configuration failure reason, and to transmit the new SCG configuration information to the apparatus, so that the apparatus transmits it to the UE, or to trigger the SeNB to reset the new SCG configuration information based upon the SCG configuration failure reason, and to transmit the new SCG configuration information to the UE; and
if the apparatus is the SeNB, upon reception of the SCG configuration failure reason transmitted by the MeNB, to trigger directly the new SCG configuration information to be reset locally based upon the SCG configuration failure reason, and to transmit the new SCG configuration information to the MeNB, so that the MeNB transmits it to the UE, or to transmit the new SCG configuration information directly to the UE.

Optionally, the processing unit 102 configured to trigger the new SCG configuration information to be reset, based upon the SCG configuration failure reason is configured:
to trigger the SeNB to perform any one of the following operations:
if the SCG configuration failure reason is determined as "scg-ConfigurationFailure", then the SeNB will reset the new SCG configuration information in a preset manner;
if the SCG configuration failure reason is determined as "UECapability-Exceeded", then the SeNB will renegotiate with the MeNB, and after a UE capability is reevaluated, the SeNB will reset the new SCG configuration information according to an evaluation result; and
if the SCG configuration failure reason is determined as "ParseError" or "ParameterError", then the SeNB will adjust unsuccessfully configured SCG configuration information correspondingly, and reset the new SCG configuration information according to an adjustment result.

As illustrated in Fig. 11, an embodiment of the invention provides an apparatus for configuring a cell (e.g., a user equipment), which includes at least a configuring unit 110, a communicating unit 111, and a processing unit 112, where:
the configuring unit 110 is configure a Secondary Cell Group (SCG) according to SCG configuration information transmitted by the network side;
the communicating unit 111 is configured to transmit SCG reconfiguration failure information to the network side upon determining that the SCG fails to be configured; and
the processing unit 112 is configured to maintain original SCG configuration information lastly transmitted by the network side, or to release the SCG, upon determining that a Master Cell Group (MCG) is configured successfully.

Optionally, the processing unit 112 configured to maintain the original SCG configuration information lastly transmitted by the network side, or to release the SCG, upon determining that the MCG is configured successfully is configured:
if MCG configuration information transmitted by the network side is further received, and it is determined that the MCG is configured successfully, to apply the successfully configured MCG configuration information, and to maintain the lastly transmitted original SCG configuration information, or to release the SCG; or
if no MCG configuration information transmitted by the network side is received, to maintain original MCG configuration information lastly transmitted by the network side, and to maintain the lastly transmitted original SCG configuration information, or to release the SCG

Optionally, the communicating unit 111 configured to transmit the SCG reconfiguration failure information to the network side is configured:
to determine an SCG configuration failure reason, and to generate the corresponding SCG reconfiguration failure information based upon the SCG configuration failure reason; and
to transmit the SCG reconfiguration failure information to the network side, and to trigger the network side to reset and transmit new SCG configuration information based upon the SCG configuration failure reason.

Optionally, the communicating unit 111 configured to determine the SCG configuration failure reason is configured:
to determine the SCG configuration failure reason as any one of:
"scg-ConfigurationFailure";
"UECapability-Exceeded";
"ParseError"; and
"ParameterError".

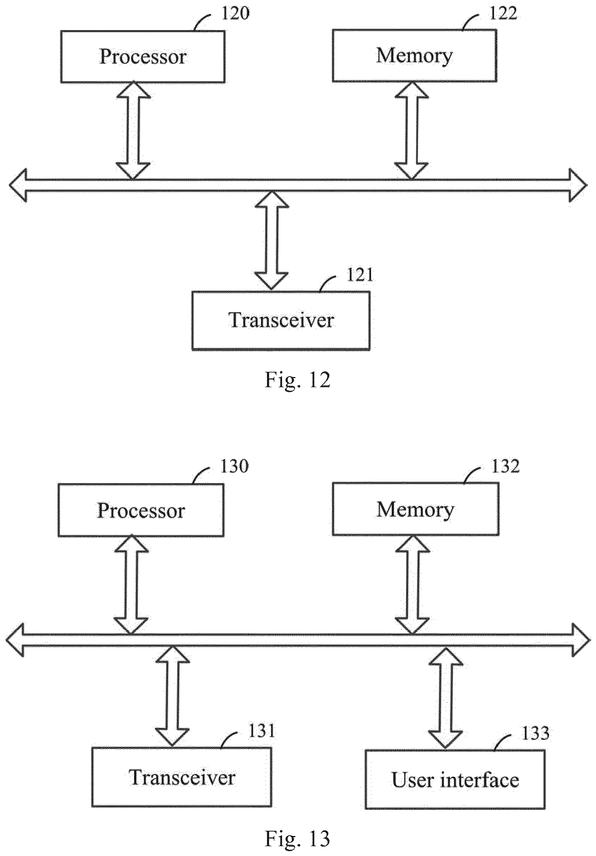

As illustrated in Fig. 12, an embodiment of the invention provides an apparatus for configuring a cell (e.g., a first eNB), which includes a processor 120, a transceiver 121, and a memory 122, where:
the processor 120 is configured to read and execute program in the memory 122:
to transmit Secondary Cell Group (SCG) configuration information, or to receive SCG reconfiguration failure information, through the transceiver 121;
to trigger the SCG configuration information to be set;
to trigger the SCG configuration information to be transmitted to a User Equipment (UE), and to trigger the UE to configure an SCG; and
to determine that the UE fails to configure the SCG, upon reception of the SCG reconfiguration failure information, and to trigger lastly transmitted original SCG configuration information to be maintained, or to trigger the SCG to be released, upon determining that a Master Cell Group (MCG) is configured successfully.

The transceiver 121 is configured to receive and transmit data under the control of the processor 120.

Optionally, the processor 120 configured to trigger the SCG configuration information to be set is configured:
if the apparatus is the MeNB, to trigger the SeNB to set the corresponding SCG configuration information for the UE; and
if the apparatus is the SeNB, to directly trigger the corresponding SCG configuration information to be set locally for the UE.

Optionally, the processor 120 configured to trigger the SCG configuration information to be transmitted to the UE to configure the SCG is configured:
if the apparatus is the MeNB, to transmit locally set MCG configuration information, and the SCG configuration information set by the SeNB to the UE using a first message; or to transmit only the SCG configuration information set by the SeNB to the UE using a first message; and
if the apparatus is the SeNB, to transmit the locally set SCG configuration information directly to the UE using a first message.

Optionally, the processor 120 configured to determine that the UE fails to configure the SCG, upon reception of the SCG reconfiguration failure information is configured:
if the apparatus is the MeNB, to determine that the UE fails to configure the SCG, upon direct reception of the SCG reconfiguration failure information transmitted by the UE; and
if the apparatus is the SeNB, to determine that the UE fails to configure the SCG, upon reception of the SCG reconfiguration failure information transmitted by the MeNB, where the received SCG reconfiguration failure information transmitted by the MeNB is transmitted by the MeNB to the apparatus upon reception of SCG reconfiguration failure information transmitted by the UE.

Optionally, the processor 120 configured to determine that the UE fails to configure the SCG, and to trigger the lastly transmitted original SCG configuration information to be maintained, upon determining that the MCG is configured successfully:
if the apparatus is the MeNB, then after it is determined that the UE fails to configure the SCG, if it is determined that the MCG is configured successfully, to apply successfully configured MCG configuration information, and to transmit the SCG reconfiguration failure information to the SeNB to trigger the SeNB to maintain the lastly transmitted original SCG configuration information; or after it is determined that the UE fails to configure the SCG, to maintain original MCG configuration information, and to transmit the SCG reconfiguration failure information to the SeNB to trigger the SeNB to maintain the lastly transmitted original SCG configuration information; and
if the apparatus is the SeNB, to determine that the UE fails to configure the SCG, and to maintain the lastly transmitted original SCG configuration information upon determining that the MCG is configured successfully.

Optionally, the processor 120 configured to determine that the UE fails to configure the SCG, and to trigger the SCG to be released, upon determining that the MCG is configured successfully:
if the apparatus is the MeNB, then after it is determined that the UE fails to configure the SCG, if it is determined that the MCG is configured successfully, to apply successfully configured MCG configuration information, and to transmit the SCG reconfiguration failure information to the SeNB to trigger the SeNB to release the SCG; or after it is determined that the UE fails to configure the SCG, to maintain original MCG configuration information, and to transmit the SCG reconfiguration failure information to the SeNB to trigger the SeNB to release the SCG; and
if the apparatus is the SeNB, to determine that the UE fails to configure the SCG, and to release the SCG upon determining that the MCG is configured successfully.

Optionally, the processor 120 is further configured:
to obtain a corresponding SCG configuration failure reason based upon the received SCG reconfiguration failure information, and to trigger corresponding new SCG configuration information to be reset and retransmitted, based upon the SCG configuration failure reason.

Optionally, the processor 120 configured to trigger the corresponding new SCG configuration information to be reset and retransmitted, based upon the SCG configuration failure reason is configured:
if the apparatus is the MeNB, to transmit the SCG configuration failure reason to the SeNB to trigger the SeNB to reset the new SCG configuration information based upon the SCG configuration failure reason, and to transmit the new SCG configuration information to the apparatus, so that the apparatus transmits it to the UE, or to trigger the SeNB to reset the new SCG configuration information based upon the SCG configuration failure reason, and to transmit the new SCG configuration information to the UE; and
if the apparatus is the SeNB, upon reception of the SCG configuration failure reason transmitted by the MeNB, to trigger directly the new SCG configuration information to be reset locally based upon the SCG configuration failure reason, and to transmit the new SCG configuration information to the MeNB, so that the MeNB transmits it to the UE, or to transmit the new SCG configuration information directly to the UE.

Optionally, the processor 120 configured to trigger the new SCG configuration information to be reset, based upon the SCG configuration failure reason is configured:
to trigger the SeNB to perform any one of the following operations:
if the SCG configuration failure reason is determined as "scg-ConfigurationFailure", then the SeNB will reset the new SCG configuration information in a preset manner;
if the SCG configuration failure reason is determined as "UECapability-Exceeded", then the SeNB will renegotiate with the MeNB, and after a UE capability is reevaluated, the SeNB will reset the new SCG configuration information according to an evaluation result; and
if the SCG configuration failure reason is determined as "ParseError" or "ParameterError", then the SeNB will adjust unsuccessfully configured SCG configuration information correspondingly, and reset the new SCG configuration information according to an adjustment result.

Here, the processor 120, the transceiver 121, and the memory 122 can be connected on a bus. In Fig. 12, the bus architecture can include any number of interconnecting buses and bridges to particularly link together various circuits including one or more processors represented by the processor 120, and one or more memories represented by the memory 122. The bus architecture can further link together various other circuits, e.g., a peripheral device, a manostat, a power management circuit, etc., all of which are well known in the art, so a further description thereof will be omitted in this context. The bus interface serves as an interface. The transceiver 121 can be a number of elements, e.g., a transmitter and a receiver, which are units for communication with various other devices on a transmission medium.

The processor 120 is responsible for managing the bus architecture and performing normal processes, and the memory 122 can store data for use by the processor 120 in performing the operations.

As illustrated in Fig. 13, an embodiment of the invention provides an apparatus for configuring a cell (e.g., a user equipment), which includes a processor 130, a transceiver 131, a memory 132, and a user interface 133, where:
the processor 130 is configured to read and execute program in the memory 132:
   to transmit Secondary Cell Group (SCG)reconfiguration failure information, or to receive SCG configuration information, through the transceiver 131;
   to configure an SCG according to the SCG configuration information transmitted by the network side;
   to transmit SCG reconfiguration failure information to the network side upon determining that the SCG fails to be configured; and
   to maintain original SCG configuration information lastly transmitted by the network side, or to release the SCG, upon determining that a Master Cell Group (MCG) is configured successfully; and
the transceiver 131 is configured to receive and transmit data under the control of the processor 130.

Optionally, the processor 130 configured to maintain the original SCG configuration information lastly transmitted by the network side, or to release the SCG, upon determining that the MCG is configured successfully is configured:
if MCG configuration information transmitted by the network side is further received, and it is determined that the MCG is configured successfully, to apply the successfully configured MCG configuration information, and to maintain the lastly transmitted original SCG configuration information, or to release the SCG; or
if no MCG configuration information transmitted by the network side is received, to maintain original MCG configuration information lastly transmitted by the network side, and to maintain the lastly transmitted original SCG configuration information, or to release the SCG

Optionally, the processor 130 configured to transmit the SCG reconfiguration failure information to the network side is configured:
to determine an SCG configuration failure reason, and to generate the corresponding SCG reconfiguration failure information based upon the SCG configuration failure reason; and
to transmit the SCG reconfiguration failure information to the network side.

Optionally, the processor 130 configured to determine the SCG configuration failure reason is configured:
to determine the SCG configuration failure reason as any one of:
"scg-ConfigurationFailure";
"UECapability-Exceeded";
"ParseError"; and
"ParameterError".

Here, the processor 130, the transceiver 131, the memory 132, and the user interface 133 can be connected on a bus. In Fig.13, the bus architecture can include any number of interconnecting buses and bridges to particularly link together various circuits including one or more processors represented by the processor 130, and one or more memories represented by the memory 132. The bus architecture can further link together various other circuits, e.g., a peripheral device, a manostat, a power management circuit, etc., all of which are well known in the art, so a further description thereof will be omitted in this context. The bus interface serves as an interface. The transceiver 131 can be a number of elements, e.g., a transmitter and a receiver, which are units for communication with various other devices on a transmission medium. For different user equipments, the user interface 133 can also be an interface via which devices are connected internally and externally as needed, and the connected devices include but will not be limited to a keypad, a monitor, a speaker, a microphone, a joystick, etc.

The processor 130 is responsible for managing the bus architecture and performing normal processes, and the memory 132 can store data for use by the processor 800 in performing the operations.

In summary, in the embodiments of the invention, in the scenario where an MeNB and an SeNB interoperate with each other, a first eNB transmits SCG configuration information to a UE to configure an SCG, and the UE transmits SCG reconfiguration failure information to the network side upon determining that the SCG fails to be configured; and at this time, the UE and the network side maintain lastly transmitted original SCG configuration information, or release the SCG, upon determining that an MCG is configured successfully, that is, in the case that only the SCG fails to be configured, the original SCG configuration information is applied instead of initiating an RRC re-setup procedure frequently, so that data can be avoided in effect from being interrupted seriously, and the user equipment can communicate normally, thus improving the efficiency of transmitting the data, guaranteeing the performance of the system, and improving a user experience.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the spirit and scope of the invention. Thus the invention is also intended to encompass these modifications and variations thereto so long as the modifications and variations come into the scope of the claims appended to the invention and their equivalents.

## Claims

1. A method for configuring a cell, the method being applicable to a scenario where a Master eNB (MeNB) and a Secondary eNB (SeNB) interoperate with each other, and comprising:
triggering, by a first eNB, Secondary Cell Group (SCG) configuration information to be set;
triggering, by the first eNB, the SCG configuration information to be transmitted to a User Equipment (UE), and triggering the UE to configure an SCG; and
determining, by the first eNB, that the UE fails to configure the SCG, upon reception of SCG reconfiguration failure information, and triggering lastly transmitted original SCG configuration information to be maintained, or triggering the SCG to be released, upon determining that a Master Cell Group (MCG) is configured successfully.

2. The method according to claim 1, wherein triggering, by the first eNB, the SCG configuration information to be set comprises:
if the first eNB is the MeNB, then triggering, by the first eNB, the SeNB to set a corresponding SCG configuration information for the UE;
if the first eNB is the SeNB, then directly triggering, by the first eNB, a corresponding SCG configuration information to be set locally for the UE.

3. The method according to claim 1, wherein triggering, by the first eNB, the SCG configuration information to be transmitted to the UE comprises:
if the first eNB is the MeNB, then transmitting, by the first eNB, locally set MCG configuration information, and the SCG configuration information set by the SeNB to the UE using a first message; or transmitting, by the first eNB, only the SCG configuration information set by the SeNB to the UE using a first message;
if the first eNB is the SeNB, then transmitting, by the first eNB, the locally set SCG configuration information directly to the UE using a first message.

4. The method according to claim 1, 2, or 3, wherein determining, by the first eNB, that the UE fails to configure the SCG, upon reception of the SCG reconfiguration failure information comprises:
if the first eNB is the MeNB, then determining, by the first eNB, that the UE fails to configure the SCG, upon direct reception of the SCG reconfiguration failure information transmitted by the UE;
if the first eNB is the SeNB, then determining, by the first eNB, that the UE fails to configure the SCG, upon reception of the SCG reconfiguration failure information transmitted by the MeNB, wherein the SCG reconfiguration failure information transmitted by the MeNB is transmitted by the MeNB to the first eNB upon reception of SCG reconfiguration failure information transmitted by the UE.

5. The method according to claim 4, wherein determining, by the first eNB, that the UE fails to configure the SCG and triggering the lastly transmitted original SCG configuration information to be maintained, upon determining that the MCG is configured successfully comprises:
if the first eNB is the MeNB, then after the first eNB determines that the UE fails to configure the SCG if it is determined that the MCG is configured successfully, then applying successfully configured MCG configuration information, and transmitting the SCG reconfiguration failure information to the SeNB to trigger the SeNB to maintain the lastly transmitted original SCG configuration information; or after the first eNB determines that the UE fails to configure the SCG, maintaining original MCG configuration information, and transmitting the SCG reconfiguration failure information to the SeNB to trigger the SeNB to maintain the lastly transmitted original SCG configuration information; or
if the first eNB is the SeNB, then determining, by the first eNB, that the UE fails to configure the SCG and maintaining the lastly transmitted original SCG configuration information upon determining that the MCG is configured successfully.

6. The method according to claim 4, wherein determining, by the first eNB, that the UE fails to configure the SCG and triggering the SCG to be released, upon determining that the MCG is configured successfully comprises:
if the first eNB is the MeNB, then after the first eNB determines that the UE fails to configure the SCG, if it is determined that the MCG is configured successfully, then applying successfully configured MCG configuration information, and transmitting the SCG reconfiguration failure information to the SeNB to trigger the SeNB to release the SCG; or after the first eNB determines that the UE fails to configure the SCG, maintaining original MCG configuration information, and transmitting the SCG reconfiguration failure information to the SeNB to trigger the SeNB to release the SCG; or
if the first eNB is the SeNB, then determining, by the first eNB, that the UE fails to configure the SCG, and releasing the SCG upon determining that the MCG is configured successfully.

7. The method according to claim 1, 2, or 3, wherein the method further comprises:
obtaining, by the first eNB, a corresponding SCG configuration failure reason based upon the received SCG reconfiguration failure information, and triggering corresponding new SCG configuration information to be reset and retransmitted, based upon the SCG configuration failure reason.

8. The method according to claim 7, wherein triggering, by the first eNB, the corresponding new SCG configuration information to be reset and retransmitted, based upon the SCG configuration failure reason comprises:
if the first eNB is the MeNB, then transmitting, by the first eNB, the SCG configuration failure reason to the SeNB to trigger the SeNB to reset the new SCG configuration information based upon the SCG configuration failure reason, and transmitting the new SCG configuration information to the first eNB, so that the first eNB transmits it to the UE, or triggering the SeNB to reset the new SCG configuration information based upon the SCG configuration failure reason, and transmitting the new SCG configuration information to the UE;
if the first eNB is the SeNB, then upon reception of the SCG configuration failure reason transmitted by the MeNB, triggering directly, by the first eNB, the new SCG configuration information to be reset locally based upon the SCG configuration failure reason, and transmitting the new SCG configuration information to the MeNB, so that the MeNB transmits it to the UE, or transmitting, by the first eNB, the new SCG configuration information directly to the UE.

9. The method according to claim 8, wherein triggering, by the first eNB, the new SCG configuration information to be reset, based upon the SCG configuration failure reason comprises:
triggering, by the first eNB, the SeNB to perform any one of the following operations:
if the SCG configuration failure reason is determined as scg-ConfigurationFailure, then the SeNB will reset the new SCG configuration information in a preset manner;
if the SCG configuration failure reason is determined as UECapability-Exceeded, then the SeNB will renegotiate with the MeNB, and after a UE capability is reevaluated, the SeNB will reset the new SCG configuration information according to an evaluation result; and
if the SCG configuration failure reason is determined as ParseError or ParameterError, then the SeNB will adjust unsuccessfully configured SCG configuration information correspondingly, and reset the new SCG configuration information according to an adjustment result.

10. A method for configuring a cell, the method being applicable to a scenario where a Master eNB (MeNB) and a Secondary eNB (SeNB) interoperate with each other, and comprising:
configuring, by a User Equipment (UE), a Secondary Cell Group (SCG) according to SCG configuration information transmitted by the network side;
transmitting, by the UE, SCG reconfiguration failure information to the network side upon determining that the SCG fails to be configured; and
maintaining, by the UE, original SCG configuration information lastly transmitted by the network side, or releasing the SCG, upon determining that a Master Cell Group (MCG) is configured successfully.

11. The method according to claim 10, wherein maintaining, by the UE, the original SCG configuration information lastly transmitted by the network side, or releasing the SCG, upon determining that the MCG is configured successfully comprises:
if the UE further receives MCG configuration information transmitted by the network side, and determines that the MCG is configured successfully, then applying, by the UE, the successfully configured MCG configuration information, and maintaining the lastly transmitted original SCG configuration information, or releasing the SCG;
if the UE receives no MCG configuration information transmitted by the network side, then maintaining, by the UE, original MCG configuration information lastly transmitted by the network side, and maintaining the lastly transmitted original SCG configuration information, or releasing the SCG

12. The method according to claim 10 or 11, wherein before the UE transmits the SCG reconfiguration failure information to the network side, the method further comprises:
determining, by the UE, an SCG configuration failure reason, and generating the corresponding SCG reconfiguration failure information based upon the SCG configuration failure reason.

13. The method according to claim 12, wherein the UE determines the SCG configuration failure reason as any one of:
scg-ConfigurationFailure;
UECapability-Exceeded;
ParseError; and
ParameterError.

14. An apparatus for configuring a cell, the apparatus being applicable to a scenario where a Master eNB (MeNB) and a Secondary eNB (SeNB) interoperate with each other, and comprising:
a first triggering unit configured to trigger Secondary Cell Group (SCG) configuration information to be set;
a second triggering unit configured to trigger the SCG configuration information to be transmitted to a User Equipment (UE), and to trigger the UE to configure an SCG; and
a processing unit configured to determine that the UE fails to configure the SCG, upon reception of SCG reconfiguration failure information, and to trigger lastly transmitted original SCG configuration information to be maintained, or to trigger the SCG to be released, upon determining that a Master Cell Group (MCG) is configured successfully.

15. The apparatus according to claim 14, wherein the first triggering unit is configured to trigger the SCG configuration information to be set by:
if the apparatus is the MeNB, triggering the SeNB to set the corresponding SCG configuration information for the UE;
if the apparatus is the SeNB, directly triggering the corresponding SCG configuration information to be set locally for the UE.

16. The apparatus according to claim 14, wherein the second triggering unit is configured to trigger the SCG configuration information to be transmitted to the UE by:
if the apparatus is the MeNB, transmitting locally set MCG configuration information, and the SCG configuration information set by the SeNB to the UE using a first message; or transmitting only the SCG configuration information set by the SeNB to the UE using a first message;
if the apparatus is the SeNB, transmitting the locally set SCG configuration information directly to the UE using a first message.

17. The apparatus according to claim 14, 15, or 16, wherein the processing unit is configured to determine that the UE fails to configure the SCG, upon reception of the SCG reconfiguration failure information by:
if the apparatus is the MeNB, determining that the UE fails to configure the SCG, upon direct reception of the SCG reconfiguration failure information transmitted by the UE;
if the apparatus is the SeNB, determining that the UE fails to configure the SCG, upon reception of the SCG reconfiguration failure information transmitted by the MeNB, wherein the SCG reconfiguration failure information transmitted by the MeNB is transmitted by the MeNB to the apparatus upon reception of SCG reconfiguration failure information transmitted by the UE.

18. The apparatus according to claim 17, wherein the processing unit is configured to determine that the UE fails to configure the SCG and to trigger the lastly transmitted original SCG configuration information to be maintained, upon determining that the MCG is configured successfully by:
if the apparatus is the MeNB, then after it is determined that the UE fails to configure the SCG, if it is determined that the MCG is configured successfully, applying successfully configured MCG configuration information, and transmitting the SCG reconfiguration failure information to the SeNB to trigger the SeNB to maintain the lastly transmitted original SCG configuration information; or after it is determined that the UE fails to configure the SCG, maintaining original MCG configuration information, and transmitting the SCG reconfiguration failure information to the SeNB to trigger the SeNB to maintain the lastly transmitted original SCG configuration information; or
if the apparatus is the SeNB, determining that the UE fails to configure the SCG, and maintaining the lastly transmitted original SCG configuration information upon determining that the MCG is configured successfully.

19. The apparatus according to claim 17, wherein the processing unit is configured to determine that the UE fails to configure the SCG, and to trigger the SCG to be released, upon determining that the MCG is configured successfully by:
if the apparatus is the MeNB, then after it is determined that the UE fails to configure the SCG, if it is determined that the MCG is configured successfully, applying successfully configured MCG configuration information, and to transmit the SCG reconfiguration failure information to the SeNB to trigger the SeNB to release the SCG; or after it is determined that the UE fails to configure the SCG, maintaining original MCG configuration information, and transmitting the SCG reconfiguration failure information to the SeNB to trigger the SeNB to release the SCG; or
if the apparatus is the SeNB, determining that the UE fails to configure the SCG, and releasing the SCG upon determining that the MCG is configured successfully.

20. The apparatus according to claim 15, 16, or 17, wherein the processing unit is further configured:
to obtain a corresponding SCG configuration failure reason based upon the SCG reconfiguration failure information, and to trigger corresponding new SCG configuration information to be reset and retransmitted, based upon the SCG configuration failure reason.

21. The apparatus according to claim 20, wherein the processing unit is configured to trigger the corresponding new SCG configuration information to be reset and retransmitted, based upon the SCG configuration failure reason by:
if the apparatus is the MeNB, transmitting the SCG configuration failure reason to the SeNB to trigger the SeNB to reset the new SCG configuration information based upon the SCG configuration failure reason, and transmitting the new SCG configuration information to the apparatus, so that the apparatus transmits it to the UE, or triggering the SeNB to reset the new SCG configuration information based upon the SCG configuration failure reason, and transmitting the new SCG configuration information to the UE;
if the apparatus is the SeNB, upon reception of the SCG configuration failure reason transmitted by the MeNB, triggerring directly the new SCG configuration information to be reset locally based upon the SCG configuration failure reason, and transmitting the new SCG configuration information to the MeNB, so that the MeNB transmits it to the UE, or transmitting the new SCG configuration information directly to the UE.

22. The apparatus according to claim 21, wherein the processing unit is configured to trigger the new SCG configuration information to be reset, based upon the SCG configuration failure reason by triggering the SeNB to perform any one of the following operations:
if the SCG configuration failure reason is determined as scg-ConfigurationFailure, the SeNB will reset the new SCG configuration information in a preset manner;
if the SCG configuration failure reason is determined as UECapability-Exceeded, the SeNB will renegotiate with the MeNB, and after a UE capability is reevaluated, the SeNB will reset the new SCG configuration information according to an evaluation result; and
if the SCG configuration failure reason is determined as ParseError or ParameterError, the SeNB will adjust unsuccessfully configured SCG configuration information correspondingly, and reset the new SCG configuration information according to an adjustment result.

23. An apparatus for configuring a cell, the apparatus being applicable to a scenario where a Master eNB (MeNB) and a Secondary eNB (SeNB) interoperate with each other, and comprising:
a configuring unit configure a Secondary Cell Group (SCG) according to SCG configuration information transmitted by the network side;
a communicating unit configured to transmit SCG reconfiguration failure information to the network side upon determining that the SCG fails to be configured; and
a processing unit configured to maintain original SCG configuration information lastly transmitted by the network side, or to release the SCG, upon determining that a Master Cell Group (MCG) is configured successfully.

24. The apparatus according to claim 23, wherein the processing unit is configured to maintain the original SCG configuration information lastly transmitted by the network side, or to release the SCG, upon determining that the MCG is configured successfully by:
if MCG configuration information transmitted by the network side is further received, and it is determined that the MCG is configured successfully, applying the successfully configured MCG configuration information, and maintaining the lastly transmitted original SCG configuration information, or to release the SCG;
if no MCG configuration information transmitted by the network side is received, maintaining original MCG configuration information lastly transmitted by the network side, and maintaining the lastly transmitted original SCG configuration information, or releasing the SCG.

25. The apparatus according to claim 23 or 24, wherein the communicating unit is configured to transmit the SCG reconfiguration failure information to the network side by:
determining an SCG configuration failure reason, generating the corresponding SCG reconfiguration failure information based upon the SCG configuration failure reason, and transmitting the SCG reconfiguration failure information to the network side.

26. The apparatus according to claim 25, wherein the communicating unit is configured to determine the SCG configuration failure reason by determining the SCG configuration failure reason as any one of:
scg-ConfigurationFailure;
UECapability-Exceeded;
ParseError; and
ParameterError.

27. An apparatus for configuring a cell, the apparatus comprising a processor, a transceiver, and a memory, wherein:
the processor is configured to read and execute program in the memory:
to transmit Secondary Cell Group (SCG) configuration information, or to receive SCG reconfiguration failure information, through the transceiver;
to trigger the SCG configuration information to be set;
to trigger the SCG configuration information to be transmitted to a User Equipment (UE) to configure an SCG; and
to determine that the UE fails to configure the SCG, upon reception of the SCG reconfiguration failure information, and to trigger lastly transmitted original SCG configuration information to be maintained, or to trigger the SCG to be released, upon determining that a Master Cell Group (MCG) is configured successfully; and
the transceiver is configured to receive and transmit data under the control of the processor.

28. The apparatus according to claim 27, wherein the processor is configured to trigger the SCG configuration information to be set by:
if the apparatus is the MeNB, triggering the SeNB to set the corresponding SCG configuration information for the UE;
if the apparatus is the SeNB, directly triggering the corresponding SCG configuration information to be set locally for the UE.

29. The apparatus according to claim 27, wherein the processor is configured to trigger the SCG configuration information to be transmitted to the UE by:
if the apparatus is the MeNB, transmitting locally set MCG configuration information, and the SCG configuration information set by the SeNB to the UE using a first message; or transmitting only the SCG configuration information set by the SeNB to the UE using a first message;
if the apparatus is the SeNB, transmitting the locally set SCG configuration information directly to the UE using a first message.

30. The apparatus according to claim 27, 28, or 29, wherein the processor is configured to determine that the UE fails to configure the SCG, upon reception of the SCG reconfiguration failure information by:
if the apparatus is the MeNB, determining that the UE fails to configure the SCG, upon direct reception of the SCG reconfiguration failure information transmitted by the UE;
if the apparatus is the SeNB, determining that the UE fails to configure the SCG, upon reception of the SCG reconfiguration failure information transmitted by the MeNB, wherein the SCG reconfiguration failure information transmitted by the MeNB is transmitted by the MeNB to the apparatus upon reception of SCG reconfiguration failure information transmitted by the UE.

31. The apparatus according to claim 30, wherein the processor is configured to determine that the UE fails to configure the SCG, and to trigger the lastly transmitted original SCG configuration information to be maintained, upon determining that the MCG is configured successfully by:
if the apparatus is the MeNB, then after it is determined that the UE fails to configure the SCG, if it is determined that the MCG is configured successfully, applying successfully configured MCG configuration information, and transmitting the SCG reconfiguration failure information to the SeNB to trigger the SeNB to maintain the lastly transmitted original SCG configuration information; or after it is determined that the UE fails to configure the SCG, maintaining original MCG configuration information, and transmitting the SCG reconfiguration failure information to the SeNB to trigger the SeNB to maintain the lastly transmitted original SCG configuration information; or
if the apparatus is the SeNB, determining that the UE fails to configure the SCG, and maintaining the lastly transmitted original SCG configuration information upon determining that the MCG is configured successfully.

32. The apparatus according to claim 30, wherein the processor is configured to determine that the UE fails to configure the SCG, and to trigger the SCG to be released, upon determining that the MCG is configured successfully by:
if the apparatus is the MeNB, then after it is determined that the UE fails to configure the SCG, if it is determined that the MCG is configured successfully, applying successfully configured MCG configuration information, and transmitting the SCG reconfiguration failure information to the SeNB to trigger the SeNB to release the SCG; or after it is determined that the UE fails to configure the SCG, maintaining original MCG configuration information, and transmitting the SCG reconfiguration failure information to the SeNB to trigger the SeNB to release the SCG; or
if the apparatus is the SeNB, determining that the UE fails to configure the SCG, and releasing the SCG upon determining that the MCG is configured successfully.

33. The apparatus according to claim 28, 29, or 30, wherein the processor is further configured:
to obtain a corresponding SCG configuration failure reason based upon the SCG reconfiguration failure information, and to trigger corresponding new SCG configuration information to be reset and retransmitted, based upon the SCG configuration failure reason.

34. The apparatus according to claim 33, wherein the processor is configured to trigger the corresponding new SCG configuration information to be reset and retransmitted, based upon the SCG configuration failure reason by:
if the apparatus is the MeNB, transmitting the SCG configuration failure reason to the SeNB to trigger the SeNB to reset the new SCG configuration information based upon the SCG configuration failure reason, and transmitting the new SCG configuration information to the apparatus, so that the apparatus transmits it to the UE, or triggering the SeNB to reset the new SCG configuration information based upon the SCG configuration failure reason, and transmitting the new SCG configuration information to the UE;
if the apparatus is the SeNB, upon reception of the SCG configuration failure reason transmitted by the MeNB, triggering directly the new SCG configuration information to be reset locally based upon the SCG configuration failure reason, and transmitting the new SCG configuration information to the MeNB, so that the MeNB transmits it to the UE, or transmitting the new SCG configuration information directly to the UE.

35. The apparatus according to claim 34, wherein the processor is configured to trigger the new SCG configuration information to be reset, based upon the SCG configuration failure reason by triggering the SeNB to perform any one of the following operations:
if the SCG configuration failure reason is determined as scg-ConfigurationFailure, resetting the new SCG configuration information in a preset manner;
if the SCG configuration failure reason is determined as UECapability-Exceeded, renegotiating with the MeNB, and after a UE capability is reevaluated, resetting the new SCG configuration information according to an evaluation result;
if the SCG configuration failure reason is determined as ParseError or ParameterError, adjusting unsuccessfully configured SCG configuration information correspondingly, and resetting the new SCG configuration information according to an adjustment result.

36. An apparatus for configuring a cell, the apparatus comprising a processor, a transceiver, a memory, and a user interface, wherein:
the processor is configured to read and execute program in the memory:
to transmit Secondary Cell Group (SCG) reconfiguration failure information, or to receive SCG configuration information, through the transceiver;
to configure an SCG according to the SCG configuration information transmitted by the network side;
to transmit SCG reconfiguration failure information to the network side upon determining that the SCG fails to be configured; and
to maintain original SCG configuration information lastly transmitted by the network side, or to release the SCG, upon determining that a Master Cell Group (MCG) is configured successfully; and
the transceiver is configured to receive and transmit data under the control of the processor.

37. The apparatus according to claim 36, wherein the processor is configured to maintain the original SCG configuration information lastly transmitted by the network side, or to release the SCG, upon determining that the MCG is configured successfully by:
if MCG configuration information transmitted by the network side is further received, and it is determined that the MCG is configured successfully, applying the successfully configured MCG configuration information, and maintaining the lastly transmitted original SCG configuration information, or releasing the SCG;
if no MCG configuration information transmitted by the network side is received, maintaining lastly transmitted original MCG configuration information by the network side, and maintaining the lastly transmitted original SCG configuration information, or releasing the SCG

38. The apparatus according to claim 36 or 37, wherein the processor is configured to transmit the SCG reconfiguration failure information to the network side by:
determining an SCG configuration failure reason, generating the corresponding SCG reconfiguration failure information based upon the SCG configuration failure reason, and transmitting the SCG reconfiguration failure information to the network side through the transceiver.

39. The apparatus according to claim 38, wherein the processor is configured to determine the SCG configuration failure reason by determining the SCG configuration failure reason as any one of:
scg-ConfigurationFailure;
UECapability-Exceeded;
ParseError; and
ParameterError.
